# EUROPEAN PATENT SPECIFICATION

(11) **EP 2 735 718 B1**
(45) Date of publication and mention of the grant of the patent: **02.01.2019**
(21) Application number: 13192167.8
(22) Date of filing: 08.11.2013
(51) Int. Cl.: F02B 61/02, F02D 9/10, F02D 19/08, F02D 41/00, F02D 41/06

(54) **Saddle type vehicle**
Motorrad
Véhicule à selle

(30) Priority: 21.11.2012 JP 2012255519
(43) Date of publication of application: 28.05.2014
(73) Proprietor: Yamaha Hatsudoki Kabushiki Kaisha, Iwata-shi, Shizuoka-ken 438 (JP)
(72) Inventor: Torigoshi, Masaki, Shizuoka, 438-8501 (JP); Kinoshita, Hisatoshi, Shizuoka, 438-8501 (JP); Moriya, Yoshihiko, Shizuoka, 438-8501 (JP)
(74) Representative: Zimmermann, Tankred Klaus

(56) References cited:
- EP-A1- 2 060 761
- EP-A2- 2 149 692
- WO-A2-2008/078162
- JP-A- 2010 019 153
- US-A- 5 722 365

## Description

### BACKGROUND OF THE INVENTION

### 1. Field of the Invention

The present invention relates to a saddle type vehicle, that is, a type of vehicle on which a rider straddles.

### 2. Description of Related Art

EP 2 149 692 A2 discloses a motorcycle equipped with an engine which uses a gasoline-alcohol mixture as a fuel. In this prior art, while an engine is not fully warmed up, the motorcycle is regulated for starting, thereby, reducing a load to the engine. More specifically, where the mixed fuel is great in alcohol ratio and the engine is low in temperature, the engine is adjusted for output so that the motorcycle is not allowed to start or allowed to start at a speed lower than it should be.

EP 2 060 761 A1 discloses a control system for an internal combustion engine in which fuel containing alcohol is uses. A cold state maximum opening of a throttle valve is set, immediately after cold start of the engine, to a value less than a maximum value and is gradually increased to the maximum value.

### SUMMARY OF THE INVENTION

In the arrangement of the above-described prior art, the vehicle is not actually allowed to start until the engine is completely warmed up. Therefore, a user is required to wait until the engine is warmed up and finds it inconvenient to use the vehicle.

A preferred embodiment of the present invention provides a saddle type vehicle equipped with an engine which is capable of burning a fuel which is a mixture of alcohol and gasoline at an arbitrary ratio. This saddle type vehicle includes an engine temperature detection means for detecting a temperature of the engine, an engine state determination means for determining based on a temperature detected by the engine temperature detection means whether or not a state of the engine is in a predetermined restriction region at which a maximum intake amount is to be restricted to a restricted maximum intake amount, and an engine control means for controlling the engine in such a manner that, when the engine state determination means determines that the state of the engine is in the restriction region, the saddle type vehicle is allowed to start in a state that the restricted maximum intake amount into the engine is kept constant, irrespective of the temperature of the engine.

In the prior art described in EP 2 149 692 A2, until the engine is completely warmed up, the motorcycle is restricted from starting. This is because there is a fear that the engine may misfire to cause engine stall or hesitation, thereby imparting an excessive load to the engine.

The present inventors have studied a cause for engine stall or hesitation, thereby arriving at the following conclusion. That is, when a throttle valve is opened to feed a great amount of air for acceleration, an increase in air amount causes decrease in a fuel ratio (air-fuel ratio) in an air-fuel mixture. Further, pressure inside an intake pipe is increased to inhibit volatilization of a fuel, thereby further decreasing the air-fuel ratio.

Thus, the present inventors have come up with an idea that a maximum intake amount is restricted to a constant value. This makes it possible to decrease an air amount in the air-fuel mixture and also keep low the pressure inside the intake pipe of the engine, thereby facilitating evaporation of the fuel. It is, thereby, possible to keep an air-fuel ratio high. Accordingly, combustion inside the engine can be attained reliably and stably even before warm-up. Then, misfire can be avoided to continue combustion inside the engine, by which a saddle type vehicle is allowed to start, without excessive load applied to the engine, before it is completely warmed up.

According to the present invention, whether or not a state of the engine is in the restriction region at which an intake amount is to be restricted is determined on the basis of the temperature of the engine. When the state of the engine is in the restriction region, the engine is controlled in such a manner that the saddle type vehicle is allowed to start in a state that a maximum intake amount is restricted to a constant value, irrespective of the temperature of the engine. As a result, the saddle type vehicle is allowed to start on the condition that the maximum intake amount is restricted, thereby eliminating a necessity for waiting for completion of warming up the engine. Thus, the saddle type vehicle is allowed to start smoothly after start of the engine. As a result, the saddle type vehicle using a fuel of alcohol-gasoline mixture can be used more conveniently.

In the prior art described in EP 2 149 692 A2, before completion of warming-up, the motorcycle is not allowed to start or only allowed to start at an extremely low speed. Therefore, a rider is unable to start the motorcycle or feels a sense of discomfort at the time of starting if the rider is able to start the motorcycle. On the contrary, in the present invention, a maximum intake amount is restricted to a constant value, whereby a rider is able to start the saddle type vehicle without hardly feeling a sense of discomfort in an intake amount range up to the maximum intake amount thus restricted.

The "maximum intake amount" is a maximum value of the intake amount which can vary by operation of an accelerator operation member installed on a saddle type vehicle. An upper limit of intake amount suppliable to an engine in terms of a structure of an intake channel, on the other hand, is referred to as an "upper intake amount." A state that the maximum intake amount has been restricted is a state that the maximum intake amount is lower than the upper intake amount. That is, where there is no restriction on the maximum intake amount, the maximum intake amount is equal to the upper intake amount. More specifically, a state that the maximum intake amount has been restricted may be a state that a maximum value of air amount passing through a throttle valve is lower than a value obtained when the throttle valve is fully open.

In a preferred embodiment of the present invention, the saddle type vehicle further includes a fuel mixing ratio obtaining means for obtaining a mixing ratio of alcohol and gasoline in a fuel. In this case, the engine state determination means may determine whether or not the state of the engine is in the predetermined restriction region on the basis of the temperature of the engine detected by the engine temperature detection means and the mixing ratio obtained by the fuel mixing ratio obtaining means.

With this arrangement, it is determined whether or not the state of the engine is in the restriction region not only based on the temperature of the engine but also based on the mixing ratio of gasoline and alcohol in a fuel. It is possible to appropriately determine the state of the engine in which the maximum intake amount is to be restricted and, therefore, the restriction to the maximum intake amount can be made in a necessary minimum level.

The mixing ratio in a fuel may be obtained on the basis of output of a sensor which detects concentrations of alcohol in the fuel, obtained on the basis of estimation by referring to oxygen concentrations in exhaust gas or obtained on the basis of input from an appropriate input unit.

The saddle type vehicle according to a preferred embodiment of the present invention further includes an intake amount restriction notifying means which notifies a user of a state that the intake amount of the engine is to be restricted when the engine state determination means determines that the state of the engine is in the predetermined restriction region. With this arrangement, the user is notified of a state that the maximum intake amount is to be restricted. Thereby, the user is able to know that the engine is in the restriction region. Therefore, where the saddle type vehicle exhibits traveling characteristics different from those at an ordinary time, the user is able to be aware of the cause thereof. Thus, the user finds it convenient to use the saddle type vehicle and the sense of discomfort is reduced. In general, a saddle type vehicle is relatively light in weight and, therefore, varies greatly in acceleration performance when output characteristics of the engine are different from those at an ordinary time. As a result, the user easily feels a sense of discomfort. Thus, the user is notified of a state that the maximum intake amount is to be restricted, whereby the user's sense of discomfort is reduced and convenience for users is improved.

Further, where there is an arrangement in which a user carries out an operation for restricting the maximum intake amount, the user can be prompted to carry out the operation for restricting the maximum intake amount.

The saddle type vehicle according to a preferred embodiment of the present invention further includes an intake amount restriction releasing notification means which notifies a user of the fact that an intake amount of the engine is not to be restricted, where the engine state determination means determines that a state of the engine is not in the predetermined restriction region in a state that a maximum intake amount of the engine is restricted. With this arrangement, the user is notified of the fact that the maximum intake amount is not to be restricted, whereby the user is able to be aware of the fact that the saddle type vehicle can be used at ordinary traveling characteristics.

Further, in the arrangement in which a user carries out an operation for restricting the maximum intake amount, the user can be notified of the fact that there is no need for restricting the maximum intake amount. Therefore, when the maximum intake amount is to be restricted at the time of starting, when the engine is subsequently completely warmed up and a state of the engine is out of the restriction region, the user can be prompted to carry out an operation for releasing restriction on the maximum intake amount.

The saddle type vehicle according to a preferred embodiment of the present invention further includes an operation means which is to be operated by an operator between a restriction position at which restriction on the maximum intake amount of the engine is placed and a release position at which the restriction on the maximum intake amount is released, and a restriction position detection means which detects the fact that the operation means is at the restriction position. In this case, the engine control means may include a start restricting means for restricting starting the saddle type vehicle, if the restriction position detection means is not in detection of the fact that the operation means is in the restriction position where the engine state determination means determines that the state of the engine is in the restriction region.

A user operates the operation means, thus making it possible to develop a state that a maximum intake amount of the engine is restricted or a state that the restriction thereof is released. Therefore, the user restricts the maximum intake amount or releases the restriction thereof by the user's own operation and, therefore, is able to accept a change in output characteristics of the engine resulting from the presence or absence of restriction on the maximum intake amount without feeling any sense of discomfort. That is, even if the presence or absence of restriction on the maximum intake amount is changed to result in a change in traveling characteristics of the saddle type vehicle, the user is able to accept the change in traveling characteristics without any serious sense of discomfort. In general, a saddle type vehicle is relatively light in weight. Thus, a change in output characteristics of the engine may result in a great change in traveling characteristics. However, if the change in traveling characteristics is derived from the user's own operation, the user can easily accept the change in traveling characteristics.

On the other hand, where a state of the engine is in the restriction region and when the operation means is not at the restriction position, the saddle type vehicle is restricted from starting. That is, in a state that operation for restricting the maximum intake amount is not carried out, the saddle type vehicle is restricted from starting. More specifically, the vehicle is prohibited from starting or allowed to start at a low speed. Thereby, when the state of the engine is in the restriction region, it is possible to avoid an excessive load to the engine and also to prompt a user to restrict the maximum intake amount by operating the operation means. It is, thereby, possible to avoid an excessive load to the engine.

The saddle type vehicle according to a preferred embodiment of the present invention further includes a throttle valve which is disposed on an intake channel of the engine, an intake amount restriction valve which is disposed on the intake channel upstream of the throttle valve, an operation means which is operated by an operator for bringing the intake amount restriction valve into a closed state, and a closed state detection means which detects whether or not the intake amount restriction valve is in the closed state. In this case, the engine control means may include a start restricting means for restricting starting the saddle type vehicle, if the closed state detection means is not in detection that the intake amount restriction valve is in the closed state where the engine state determination means determines that the state of the engine is in the restriction region.

With this arrangement, the operation means is operable to set a state that the maximum intake amount of the engine is restricted by actuating the intake amount restricting valve and a state that the restriction thereof is released. Therefore, since a user restricts the maximum intake amount or releases the restriction thereof through the user's own operation, the user is able to accept a change in output characteristics of the engine resulting from the presence or absence of restriction on the maximum intake amount without experiencing a serious sense of discomfort. That is, even where traveling characteristics of the saddle type vehicle relatively light in weight undergo a change according to a change in output characteristics of the engine, the user is able to accept the change in traveling characteristics without experiencing a serious sense of discomfort.

On the other hand, the intake amount restriction valve which is disposed on the intake channel upstream of the throttle valve can be opened and closed by operating the operation means. Where a state of the engine is in the restriction region and when the intake amount restriction valve is not in the closed state, the saddle type vehicle is restricted from starting. Thereby, when the state of the engine is in the restriction region, a user can be prompted to operate the operation means so as to restrict the maximum intake amount.

The intake amount restriction valve is arranged to restrict an intake amount upstream of the throttle valve, by which, for example, when the throttle valve is fully open, the maximum intake amount can be regulated by the opening degree of the intake amount restriction valve. It is, thereby, possible to avoid an excessive intake amount of the engine to keep a high air-fuel ratio, whereby engine stall or hesitation can be avoided.

The saddle type vehicle according to a preferred embodiment of the present invention further includes a throttle valve which is disposed on an intake channel of the engine, a regulation member which regulates a movable range of the throttle valve to a range narrower than a maximum movable range to restrict a maximum opening degree of the throttle valve, an operation means which is to be operated by an operator for allowing the regulation member to move between a restriction position at which the movable range of the throttle valve is regulated and a release position at which the movable range of the throttle valve is not regulated, and a restriction position detection means which detects that the regulation member is at the restriction position. In this case, the engine control means may include a start restricting means which restricts starting the saddle type vehicle, if the restriction position detection means is not in detection that the regulation member is at the restriction position where the engine state determination means determines that the state of the engine is in the restriction region.

With this arrangement, a user can operates the operation means to set a state that restriction on the movable range of the throttle valve is placed to restrict the maximum intake amount of the engine and a state that the restriction thereof is released. Therefore, the user restricts the maximum intake amount and releases the restriction thereof by the user's own operation and, therefore, is able to accept a change in output characteristics of the engine resulting from the presence or absence of restriction on the maximum intake amount without experiencing a serious sense of discomfort. Accordingly, the user accepts a change in traveling characteristics, without feeling a serious sense of discomfort. On the other hand, where the state of the engine is in the restriction region and when the regulation member for restricting a maximum opening degree of the throttle valve is not at the restriction position, the saddle type vehicle is restricted from starting. Thereby, where the state of the engine is in the restriction region, it is possible to avoid a great load to the engine and also prompt the user to restrict the maximum intake amount by operating the operation means.

In a preferred embodiment of the present invention, the saddle type vehicle further includes a start preparation detection means which detects a start preparation operation of the saddle type vehicle carried out by a driver. In this case, the acceleration restricting means may restrict a running state of the engine in response to the fact that the start preparation detection means has detected the start preparation operation.

With this arrangement, where the state of the engine is in the restriction region and if the start preparation operation is carried out in a state that the maximum intake amount is not restricted, the running state of the engine is restricted. Thereby, the saddle type vehicle can be restricted from start.

The start preparation operation may be such an operation that a transmission is put in gear. Further, restriction on the running state of the engine may be forced outage of the engine or restriction on output of the engine. The forced outage of the engine can be carried out, for example, by stopping supply of a fuel, stopping ignition control, and so forth. Still further, restriction on output of the engine can be made, for example, by restricting supply of a fuel, controlling ignition timing, and so forth.

Other elements, features, steps, characteristics and advantages of the present invention will become more apparent from the following detailed description of the preferred embodiments with reference to the attached drawings.

### BRIEF DESCRIPTION OF THE DRAWINGS

Fig. 1 is a side view of a motorcycle which is a saddle type vehicle according to a preferred embodiment of the present invention.
Fig. 2 is a configuration diagram which relates to an engine of the motorcycle.
Fig. 3 is a sectional view which enlarges and schematically illustrates an arrangement of an intake channel of the engine in the vicinity of a throttle valve.
Fig. 4 is a block diagram which illustrates an electric arrangement of the motorcycle.
Fig. 5 shows one example of a restriction region in which a maximum intake amount of the engine is to be restricted.
Fig. 6 is a flow chart which illustrates processing by an ECU for controlling the motorcycle, mainly showing start restriction control of the motorcycle on the basis of a state of the engine and others.
Fig. 7 relates to graphs which illustrate effects obtained by restricting the maximum intake amount, giving examples in which a temporal change has been studied with respect to an engine speed, a throttle opening degree, a suction air amount per cycle and pressure inside an intake pipe.
Fig. 8A and Fig. 8B illustrate an arrangement of a saddle type vehicle according to a second preferred embodiment of the present invention, showing an arrangement in the vicinity of a throttle valve.
Fig. 9A and Fig. 9B illustrate an arrangement of a saddle type vehicle according to a third preferred embodiment of the present invention, showing an arrangement in the vicinity of a throttle valve.
Fig. 10 illustrates an arrangement of a saddle type vehicle according to a fourth preferred embodiment of the present invention, showing schematically an arrangement in the vicinity of a throttle valve.
Fig. 11 illustrates an arrangement of a saddle type vehicle according to a fifth preferred embodiment of the present invention, showing an arrangement in relation to control of a throttle valve.
Fig. 12 illustrates an operation of an ECU according to the fifth preferred embodiment.

### DETAILED DESCRIPTION OF THE PREFERRED EMBODIMENTS

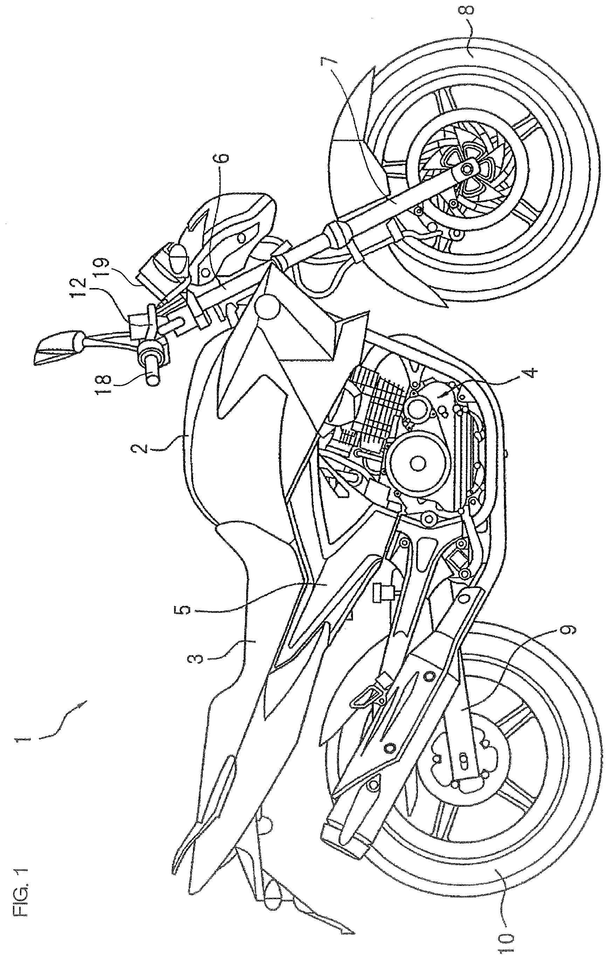

Fig. 1 is a side view of a motorcycle which is a saddle type vehicle according to a preferred embodiment of the present invention

The saddle type vehicle of the present preferred embodiment is a motorcycle 1. The motorcycle 1 is not necessarily a type shown in Fig. 1 but may include any type of motorcycle, for example, a so-called scooter type, a moped type, an off-road type and an on-road type. Further, the saddle type vehicle of the present invention is not limited to a motorcycle but may include an ATV (all terrain vehicle) and others. A saddle type vehicle is a type of vehicle on which a rider straddles.

The motorcycle 1 is provided with a fuel tank 2, a seat 3, an engine 4 which is an internal combustion engine, and a vehicle body frame 5 which supports those components. Passengers including a rider and a fellow passenger ride on the seat 3 and are seated. A head pipe 6 is installed in front of the vehicle body frame 5 and a steering shaft (not illustrated) is supported on the head pipe 6. A handle 12 is fixed at an upper part of the steering shaft. Further, a front fork 7 is installed at a lower part of the steering shaft. A front wheel 8 is supported at a lower end of the front fork 7 so as to be rotatable. A swing arm 9 is supported on the vehicle body frame 5 so as to be swingable in a vertical direction. A rear wheel 10 is supported at a rear end of the swing arm 9 so as to be rotatable. A driving force of the engine 4 is to be transmitted to the rear wheel 10.

A pair of grips which are to be held by the left and right hands of a rider are installed on both ends of the handle 12. Of these grips, one grip (for example, a right-side grip when viewed from the rider seated on the seat 3) is an accelerator grip 18 for adjusting output of the engine 4. The accelerator grip 18 is rotatably connected to one end of the handle 12. The accelerator grip 18 is an example of the accelerator operation member.

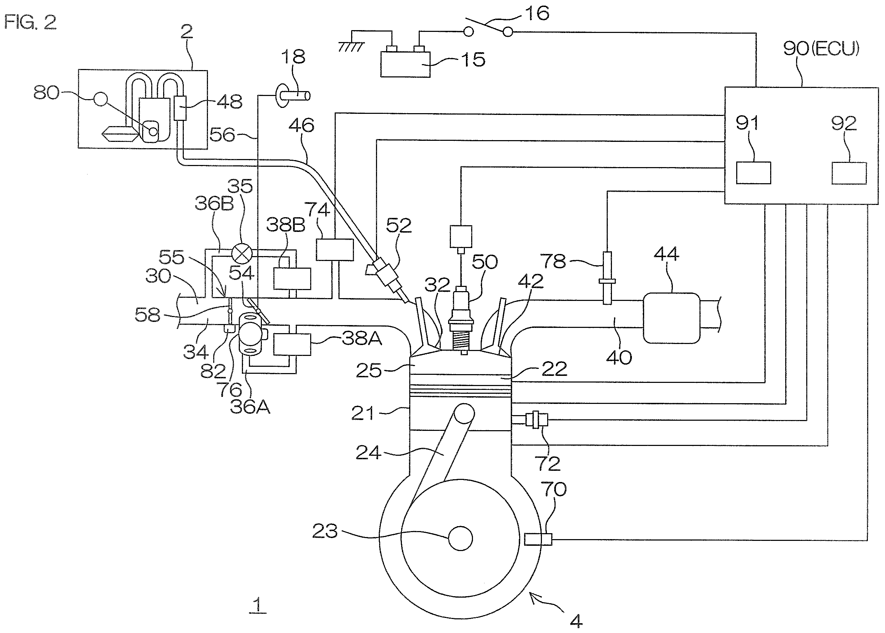

Fig. 2 is a configuration diagram which relates to the engine 4.

The engine 4 is provided with a cylinder 21, a piston 22 which reciprocates inside the cylinder 21, a crankshaft 23, and a connecting rod 24 which couples the piston 22 with the crankshaft 23. The engine 4 is a four-stroke-type single cylinder engine which repeats a cycle composed of an intake stroke, a compression stroke, an expansion stroke and an exhaust stroke. However, the engine 4 shall not be limited to a single cylinder engine but may include a multiple cylinder engine.

The engine 4 is provided with a fuel injection valve 52 which is a fuel injection device to inject a fuel and an ignition device 50 which ignites a fuel inside a combustion chamber 25. The engine 4 is provided with a rotation speed sensor 70 which detects a rotation speed of the crankshaft 23 and a temperature sensor 72 which detects a temperature of the engine 4. The rotation speed of the crankshaft 23 is the number of rotations of the crankshaft 23 per unit time. Hereinafter, the rotation speed of the crankshaft 23 is simply referred to as "rotation speed of the engine." The temperature sensor 72 may be a sensor which detects a temperature at a part of the engine 4 (for example, a cylinder 21). Where the engine 4 is of a water-cooling type, the temperature sensor 72 may be a cooling water temperature sensor which detects a temperature of a cooling water. That is, the temperature sensor 72 may be a sensor which directly detects the temperature of the engine 4, or may be a sensor which indirectly detects the temperature of the engine 4 via cooling water or others. The temperature sensor 72 is an example of an engine temperature detection means for detecting the temperature of the engine 4.

The engine 4 is provided with an intake channel 30 which introduces air into the combustion chamber 25, an intake valve 32 which opens and closes between the intake channel 30 and the combustion chamber 25, an exhaust channel 40 which discharges exhaust gas inside the combustion chamber 25 and an exhaust valve 42 which opens and closes between the combustion chamber 25 and the exhaust channel 40. In the present preferred embodiment, the fuel injection valve 52 is arranged to inject a fuel into the intake channel 30. However, the fuel injection valve 52 may be arranged to directly inject a fuel into the combustion chamber 25. Further, there may be installed two types of fuel injection valves which inject a fuel into the intake channel 30 and the combustion chamber 25, respectively. Still further, the fuel injection device for injecting a fuel into the intake channel 30 shall not be limited to the fuel injection valve 52 but may be a carburetor.

A catalyst 44 is installed on the exhaust channel 40. An O₂ sensor 78 for detecting oxygen contained in exhaust gas is installed as an air-fuel ratio sensor on the exhaust channel 40. The air-fuel ratio sensor may be a sensor which is capable of detecting at least whether or not an air-fuel ratio is in a rich region or a lean region. The O₂ sensor 78 is able to detect the fact that the air-fuel ratio is in the rich region or in the lean region. Another example of air-fuel ratio sensor includes, a linear λ sensor.

The fuel tank 2 is connected to the fuel injection valve 52 by a fuel pipe 46. Inside the fuel tank 2, installed are a fuel pump 48 which supplies a fuel to the fuel pipe 46 and a fuel sensor 80 which detects a fuel amount of the fuel tank 2. The fuel sensor 80 may be a publicly known sensor such as a level sensor. A fuel which is fed into the fuel tank 2 may be gasoline or a mixture of gasoline and ethanol.

In the motorcycle 1 of the present preferred embodiment, as will be described later, an ethanol ratio in the fuel is to be estimated on the basis of a detection value of the O₂ sensor 78. Therefore, a sensor for detecting an ethanol ratio of the fuel inside the fuel tank 2 is not installed. However, it is also possible to directly detect an ethanol ratio in the fuel by installing a sensor for detecting an ethanol ratio of the fuel inside the fuel tank 2.

The intake channel 30 is provided with a pressure sensor 74 for detecting pressure inside the intake pipe which is an internal pressure of the intake channel 30. The intake channel 30 has a main channel 34 in which a throttle valve 54 is housed as a main valve. The main channel 34 is defined by a throttle body 55. The throttle valve 54 is connected to a throttle wire 56. The throttle wire 56 is connected to the accelerator grip 18 installed on one end of the handle 12. Therefore, a rider rotates the accelerator grip 18 for operation thereof in order to adjust an opening degree of the throttle valve 54, which in turn adjusts output of the engine 4 (rotation speed of the engine).

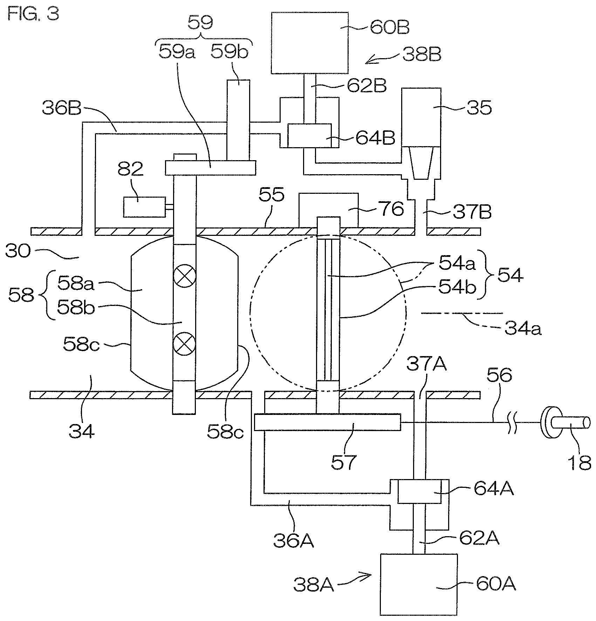

Fig. 3 is a sectional view which enlarges and schematically illustrates an arrangement in the vicinity of the throttle valve 54 of the intake channel 30.

In the present preferred embodiment, the main channel 34 is substantially circular in fluid channel cross section. Accordingly, the throttle valve 54 has a circular plate-like valve body 54a. The valve body 54a is connected to a rotational shaft 54b extending in a direction orthogonal to a direction of passage axis of the main channel 34 such that the diameter of the valve body 54a aligns with the rotational shaft 54b. The rotational shaft 54b penetrates through the throttle body 55, and connected to the throttle body 55 so as to be rotatable around the axis thereof. A pulley 57 is connected to one end of the rotational shaft 54b outside the throttle body 55. The throttle wire 56 is wound around and connected to the pulley 57. The pulley 57 is connected to a spring (not illustrated) which imparts to the throttle valve 54 a force urging toward a fully closed position. The throttle wire 56 is pulled by the operation of the acceleration grip 18, the pulley 57 rotates, and the valve body 54a rotates accordingly.

A state that the valve body 54a is orthogonal to a passage axis 34a of the main channel 34 (a state shown by the solid line) is a state that a throttle is fully closed. Further, a state that the valve body 54a is substantially parallel to the passage axis 34a of the main channel 34 (the phantom line) is a state that the throttle is fully open. A rotation range of the pulley 57 is regulated in a range between the throttle being fully closed and the throttle being fully open.

The throttle body 55 is provided with a throttle position sensor 76 which detects an opening degree of the throttle valve 54 (also refer to Fig. 2). The throttle position sensor 76 may be a sensor which detects a rotational angle position of the rotational shaft 54b.

An intake amount restriction valve 58 is disposed on the main channel 34 upstream of the throttle valve 54 with respect to a flow direction of air sucked toward the engine 4. The intake amount restriction valve 58 includes a valve body 58a and a rotational shaft 58b connected to the valve body 58a. The valve body 58a is a plate-like member obtained by cutting out a part of a circle which matches the internal shape of the main channel 34. The rotational shaft 58b is fixed to the valve body 58a so as to align with a diameter of the valve body 58a. The rotational shaft 58b is arranged parallel with the rotational shaft 54b of the throttle valve 54, and is passing over the main channel 34. The rotational shaft 58b is rotatably supported on the throttle body 55. An operation lever 59 by which a user allows the rotational shaft 58b to rotate around the axis thereof is connected to one end of the rotational shaft 58b. In the present preferred embodiment, the operation lever 59 includes a coupling portion 59a which is orthogonal to the rotational shaft 58b and an operation portion 59b which extends from the leading end of the coupling portion 59a parallel with the rotational shaft 58b. The intake amount restriction valve 58 is able to undergo displacement between a fully closed position at which the valve body 58a is orthogonal to the passage axis 34a of the main channel 34 and a fully open position at which the valve body 58a is substantially parallel to the passage axis 34a of the main channel 34. That is, the rotational shaft 58b is regulated for a rotational movement range between the fully closed position and the fully open position.

The valve body 58a of the intake amount restriction valve 58 is provided with a pair of dents 58c at an edge which is positioned on the side of the throttle valve 54 in the fully open position and at an edge which is positioned on the opposite side of the throttle valve 54. When the intake amount restriction valve 58 is at the fully closed position, air is sucked mainly through the dents 58c into the engine 4. Therefore, when the intake amount restriction valve 58 is at the fully closed position, a maximum intake amount is regulated by the dimension of each of the dents 58c. For example, a total area of the pair of dents 58c may be an area about 20% of the cross sectional area of fluid channel of the main channel 34. The area of the dents 58c is an area of a partially circular region which is surrounded by a virtual circle defined by an outer edge of the valve body 58a other than the dents 58c and also surrounded by edges of the dents 58c.

In association with the rotational shaft 58b of the intake amount restriction valve 58, an intake amount restriction valve position sensor 82 is provided. The intake amount restriction valve position sensor 82 detects whether or not the intake amount restriction valve 58 is at the fully closed position. The intake amount restriction valve position sensor 82 may be a position sensor which is similar in arrangement to the throttle position sensor 76, and a sensor unit common to the throttle position sensor 76 may be used. Further, the intake amount restriction valve position sensor 82 may be a sensor (for example, a micro switch) which is turned on or off depending on whether or not the intake amount restriction valve 58 is at the fully closed position.

The intake amount restriction valve position sensor 82 is an example of the closed state detection means which detects whether or not the intake amount restriction valve 58 is in a closed state. Further, the operation lever 59 is an example of an operation means which is operated by an operator between a restriction position (corresponding to a closed position of the intake amount restriction valve 58) which restricts a maximum intake amount of the engine 4 and a release position (corresponding to an open position of the intake amount restriction valve 58) which releases the restriction thereof. The intake amount restriction valve 58 moves together with the movement of the operation lever 59. Therefore, the intake amount restriction valve position sensor 82 also acts as a restriction position detection means for detecting that the operation lever 59 is at the restriction position.

In the present preferred embodiment, in addition to the main channel 34, the intake channel 30 is provided with a first bypass channel 36A which communicatively connects an upstream part of the throttle valve 54 with a downstream part thereof on the main channel 34, and a second bypass channel 36B which communicatively connects an upstream part of the throttle valve 54 with a downstream part thereof on the main channel 34. More specifically, the second bypass channel 36B is a channel for communicatively connecting an upstream part of the intake amount restriction valve 58 with a downstream part of the throttle valve 54 and bypasses both the intake amount restriction valve 58 and the throttle valve 54. On the other hand, the first bypass channel 36A communicatively connects the upstream part of the throttle valve 54 with the downstream part thereof downstream of the intake amount restriction valve 58 and bypasses only the throttle valve 54.

The first bypass channel 36A and the second bypass channel 36B are mutually independent bypass channels. The main channel 34, the first bypass channel 36A and the second bypass channel 36B are provided in parallel. The first and the second bypass channels 36A, 36B are smaller in cross sectional area of fluid channel than the main channel 34. The first and the second bypass channels 36A, 36B may be substantially equal in cross sectional area of fluid channel.

The throttle body 55 which defines the main channel 34 may be a component separate from the first bypass channel 36A and the second bypass channel 36B or may be designed integrally with them. Further, one of the first bypass channel 36A and the second bypass channel 36B may be integrally united with the throttle body 55, while the other of them may be arranged separate from the throttle body 55.

A first valve 38A is disposed on the first bypass channel 36A. More specifically, a first passage port 37A which is communicatively connected to the main channel 34 is defined downstream of the first bypass channel 36A. The first valve 38A is disposed in the vicinity of the first passage port 37A. The first valve 38A is adjusted for an opening degree, by which the first bypass channel 36A can be changed in cross sectional area of fluid channel. It is, thereby, possible to control an amount of air flowing through the first bypass channel 36A. In the present preferred embodiment, the first valve 38A is arranged with a solenoid valve. That is, the first valve 38A is provided with a solenoid 60A, a shaft 62A which is driven by the solenoid 60A in a vertical direction as illustrated, and a valve body 64A mounted at the leading end of the shaft 62A. The shaft 62A moves depending on the presence or absence of electric power supplied to the solenoid 60A. When the shaft 62A is allowed to move in a direction away from the main channel 34 (in a downward direction as illustrated), the valve body 64A also moves in the same direction, by which the first passage port 37A is opened. Thereby, the first bypass channel 36A is opened. In contrast, when the shaft 62A is allowed to move by the solenoid 60A in a direction toward the main channel 34 (in an upper direction as illustrated), the valve body 64A also moves in the same direction and is seated on a valve seat located on an edge of the first passage port 37A, by which the first passage port 37A is closed. Thereby, the first bypass channel 36A is closed. A driving current of the solenoid 60A is subjected to duty control, by which the valve body 64A can be kept at an intermediate position and accordingly controlled at an intermediate opening degree between an open state and a closed state.

In the present preferred embodiment, where electric power is not supplied to the solenoid 60A, the first bypass channel 36A is closed. The solenoid 60A may be arranged so as to be in a closed state where the electric power is supplied and so as to be in an open state where electric power is not supplied. However, as will be described later, when the engine 4 is completely warmed up, the first valve 38A is controlled to be in a closed state. Therefore, it is preferable that the state that electricity is not applied to the solenoid 60A is a closed state. There is no particular restriction on a position of the first valve 38A in the first bypass channel 36A. The first valve 38A may be installed at an upstream part of the first bypass channel 36A.

The second bypass channel 36B is provided with a metering valve 35 capable of adjusting an amount of air passing through the second bypass channel 36B, and a second valve 38B for opening and closing the second bypass channel 36B. The metering valve 35 is a valve which is capable of adjusting an opening degree of a pilot screw, etc. The metering valve 35 is adjusted for the opening degree so that an intake amount when the throttle valve 54 is fully closed can be adjusted, whereby an idling rotation speed can be adjusted. The idling rotation speed is a rotation speed of the engine in an idling state.

A second passage port 37B which is communicatively connected to the main channel 34 is defined downstream of the second bypass channel 36B. The metering valve 35 is disposed in the vicinity of the second passage port 37B. In the present preferred embodiment, the second valve 38B is disposed at an intermediate part of the second bypass channel 36B. The second valve 38B is controlled so as to close the second bypass channel 36B at the start of the engine 4 and open the second bypass channel 36B after start of the engine 4. In the present preferred embodiment, the second valve 38B is arranged with a solenoid valve. That is, the second valve 38B is provided with a solenoid 60B, a shaft 62B which is driven in a vertical direction as illustrated by the solenoid 60B and a valve body 64B mounted at the leading end of the shaft 62B.

The shaft 62B moves depending on whether or not electric power is supplied to the solenoid 60B. When the shaft 62B is allowed to move in a direction away from the second bypass channel 36B (in an upward direction as illustrated), the valve body 64B also moves in the same direction and the second bypass channel 36B is opened. In contrast, when the shaft 62B is allowed to move in a direction toward the second bypass channel 36B (in a downward direction as illustrated) by the solenoid 60B, the valve body 64B also moves in the same direction and the second bypass channel 36B is closed.

In the present preferred embodiment, where electric power is not supplied to the solenoid 60B, the second bypass channel 36B is opened. The solenoid 60B may be arranged so as to be in an open state when electric power is supplied and so as to be in a closed state when electric power is not supplied. However, upon completion of start of the engine 4, the second valve 38B is controlled to be in an open state. Therefore, it is preferable that the state that electricity is not applied to the solenoid 60B is an open state. There is no particular restriction on a position of the second valve 38B in the second bypass channel 36B. The second valve 38B may be installed at a downstream part of the second bypass channel 36B (for example, a downstream side relative to the metering valve 35).

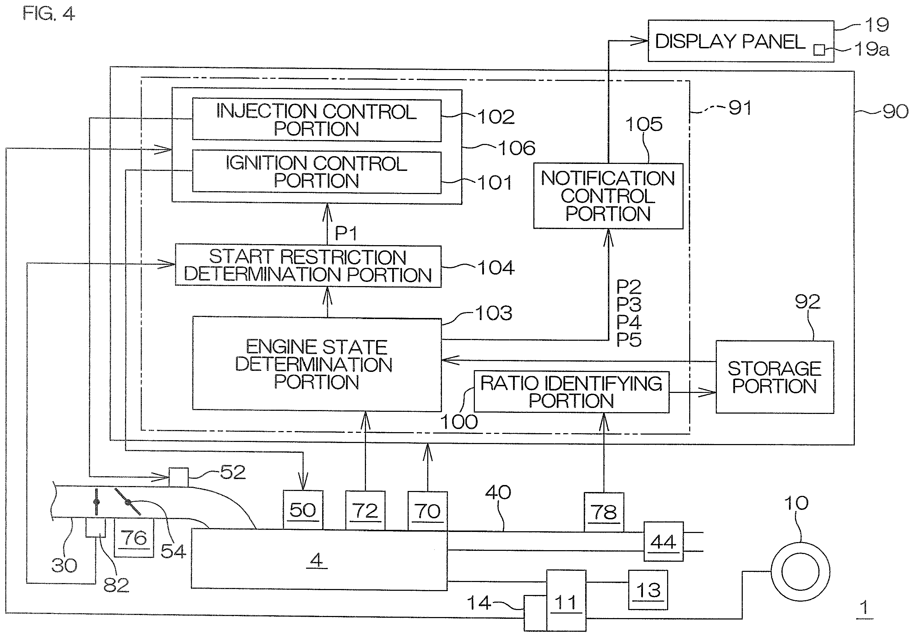

Fig. 4 is a block diagram which illustrates the electric arrangement of the motorcycle 1.

The motorcycle 1 is provided with an ECU (electronic control unit) 90 as a controller for controlling the engine 4. The ECU 90 is provided with a computing portion 91 for carrying out various types of computation and a storage portion 92 which stores control programs for providing control to be described later and various types of information. The computing portion 91 includes a CPU, and the storage portion 92 includes a ROM and a RAM. In the present preferred embodiment, the storage portion 92 includes a programmable non-volatile memory. As shown in Fig. 2, the motorcycle 1 is provided with a battery 15 and a main switch 16. When a user turns the main switch 16 ON, electricity is applied from the battery 15 to the ECU 90, and electric power is supplied to the ECU 90.

The previously described sensors are connected to the ECU 90, and detection signals are input to the ECU 90 from the sensors. Specifically, the ECU 90 is connected with the rotation speed sensor 70, the temperature sensor 72, the pressure sensor 74, the throttle position sensor 76, the O₂ sensor 78, the fuel sensor 80, and the intake amount restriction valve position sensor 82 (some of the sensors are not illustrated in Fig. 4). Where a sensor for detecting an ethanol ratio in a fuel is installed, the sensor is also connected to the ECU 90. The ECU 90 specifies a state of the engine 4 on the basis of detected values by the above-described sensors.

As schematically shown in Fig. 4, the motorcycle 1 is provided with a transmission 11. Output of the engine 4 is transmitted via the transmission 11 to the rear wheel 10. The transmission 11 is a so-called stepped transmission. The transmission 11 is provided with a plurality of shift positions and a neutral position. Further, the motorcycle 1 is provided with a transmission mechanism 13 for changing the shift position of the transmission 11. The transmission mechanism 13 includes, for example, a shift pedal which is operated by a rider using a foot. The transmission mechanism 13 may also include an actuator for assisting shift motions such as a motor. The motorcycle 1 is provided with a neutral switch 14. The neutral switch 14 functions as a neutral position sensor which detects whether or not the transmission 11 is at a neutral position. In detail, when the transmission 11 is switched between a neutral position and a non-neutral position, the neutral switch 14 is turned ON or OFF. When the neutral switch 14 is turned ON or turned OFF, the transmission 11 is detected for whether it is in a neutral position or in a non-neutral position. In addition, a so-called shift sensor can be used as a neutral position sensor.

When allowing the motorcycle 1 to start, a rider operates the transmission mechanism 13 to carry out a start preparation operation for changing a shift position from a neutral position to a non-neutral position. Thereby, the neutral switch 14 is switched from ON to OFF. Therefore, the neutral switch 14 can be used as a start preparation detection means for detecting the start preparation operation.

The computing portion 91 carries out programs housed in the storage portion 92, thereby actually acting as a plurality of functional processing units. The plurality of functional processing units include a ratio identifying portion 100, an ignition control portion 101, an injection control portion 102, an engine state determination portion 103, a start restriction determination portion 104, and a notification control portion 105.

The ratio identifying portion 100 identifies an ethanol ratio in a fuel. More specifically, the ratio identifying portion 100 estimates an ethanol ratio in a fuel on the basis of concentrations of oxygen in exhaust gas detected by the O₂ sensor 78. That is, the ratio identifying portion 100 is an example of the fuel mixing ratio obtaining means. The ethanol ratio identified by the ratio identifying portion 100 is stored in the storage portion 92. In particular, the ethanol ratio is preferably stored in a non-volatile memory which arranges the storage portion 92. Thereby, the storage portion 92 keeps the ethanol ratio even when the main switch 16 is turned OFF. That is, when the main switch 16 is turned OFF, the storage portion 92 continues to store the ethanol ratio which has been stored immediately before turning OFF of the main switch 16.

The ignition control portion 101 controls the ignition device 50. If necessary, the ignition control portion 101 carries out phase lag control for reducing output of the engine 4 by delaying ignition timing with respect to the ordinary timing. The injection control portion 102 controls the fuel injection valve 52, thereby controlling fuel injection timing and an amount of fuel injection. If necessary, the injection control portion 102 reduces an amount of fuel injection less than an ordinary time or cuts fuel injection, thereby carrying out fuel injection restriction control for reducing output of the engine 4. An output adjusting portion 106 for adjusting output of the engine 4 is arranged with the ignition control portion 101 and the injection control portion 102. The output adjusting portion 106 acts as a start restricting means for restricting starting the motorcycle 1 when the output of the engine 4 is adjusted so as to restrict starting the motorcycle 1.

The engine state determination portion 103 is an engine state determination means for determining a state of the engine 4. In the present preferred embodiment, the engine state determination portion 103 determines the state of the engine 4 on the basis of the temperature of the engine 4 detected by the temperature sensor 72 and an ethanol ratio. The ethanol ratio is obtained from the ratio identifying portion 100 or the storage portion 92. More specifically, the engine state determination portion 103 determines whether or not the state of the engine 4 is in a restriction region at which a maximum intake amount of the engine 4 is to be restricted. Determination results of the engine state determination portion 103 are given to the start restriction determination portion 104 and the notification control portion 105.

The start restriction determination portion 104 determines whether or not the motorcycle 1 is restricted from starting and gives the determination results to the output adjusting portion 106. The start restriction determination portion 104 determines whether or not the start is restricted on the basis of the determination results of the engine state determination portion 103 and a signal detected by the intake amount restriction valve position sensor 82. More specifically, where the state of the engine 4 is in the restriction region and also the intake amount restriction valve 58 is not in a fully closed position, it is determined that the start is to be restricted. The start restriction determination portion 104 gives a start restriction command P1 to the output adjusting portion 106 when the start is determined to be restricted and the neutral switch 14 is switched from ON to OFF, that is, when shift-in operation for changing to a non-neutral position (one example of the acceleration preparation operation) is carried out. In response to this, the output adjusting portion 106 carries out output adjustment control for restricting starting the motorcycle 1. The start restriction determination portion 104 and the output adjusting portion 106 constitute an example of the engine control means for controlling the engine 4 in such a manner that when the engine 4 is in a restriction region, the motorcycle 1 is allowed to start in a state that a maximum intake amount is restricted.

In the present preferred embodiment, restriction on start is to reduce the output of the engine 4 to such a level that start is impossible. More specifically, the ignition control portion 101 is used to carry out phase lag control or the injection control portion 102 is used to carry out fuel injection restriction control, by which the engine 4 is reduced in output. Thereby, clutch connection operation after the shift-in operation results in that the engine 4 is stalled or that the motorcycle 1 runs only at an extremely low speed. Thus, the motorcycle 1 is restricted from starting to run in a state that an excessive load is applied to the engine 4. Supply of a fuel may be discontinued to stall the engine, upon detection of the shift-in operation.

When a state of the engine 4 is in the restriction region and restriction on the maximum intake amount is required, the notification control portion 105 carries out control for notifying a rider to that effect. More specifically, the notification control portion 105 controls an indicator 19a which is disposed inside a display panel 19 mounted in front of the handle 12, for example. Similar warning may be given by using an indicator disposed outside the display panel 19.

The "maximum intake amount" is a maximum value of intake amount which can be increased or decreased by operation of the accelerator grip 18. If the intake amount restriction valve 58 is closed, the maximum intake amount is regulated by an opening degree thereof. On the other hand, an upper limit of intake amount which can be supplied to the engine 4 in terms of a structure of the intake channel 30 is referred to an "upper intake amount." The state that the maximum intake amount is restricted is such a state that the maximum intake amount is less than the upper intake amount. That is, when there is no restriction on the maximum intake amount, the maximum intake amount is equal to the upper intake amount. More specifically, the state that the maximum intake amount is restricted is such a state that a maximum value of air amount passing through the throttle valve 54 is less than an amount when the throttle valve 54 and the intake amount restriction value 58 are fully open.

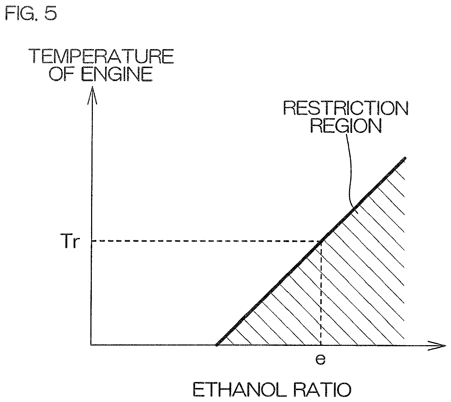

Fig. 5 shows one example of the restriction region in which the maximum intake amount of the engine 4 is to be restricted. A lateral axis indicates an ethanol ratio in a fuel, while a longitudinal axis indicates a temperature of the engine 4. A hatched region is the restriction region. That is, a threshold value of temperature of the engine with respect to an ethanol ratio e in a fuel is expressed as Tr. A range in which the temperature of the engine 4 is the threshold value Tr or less is the restriction region. The higher the ethanol ratio e becomes, the higher the threshold value Tr becomes. Restriction on the maximum intake amount is required even at a higher temperature of the engine 4. This is because ethanol is less likely to cause volatilization than gasoline.

The engine state determination portion 103 may be arranged in such a manner that it is determined whether or not a combination of a temperature of the engine and an ethanol ratio is in a restriction region, for example, by referring to a map showing the restriction region in Fig. 5. The map may be stored in the storage portion 92.

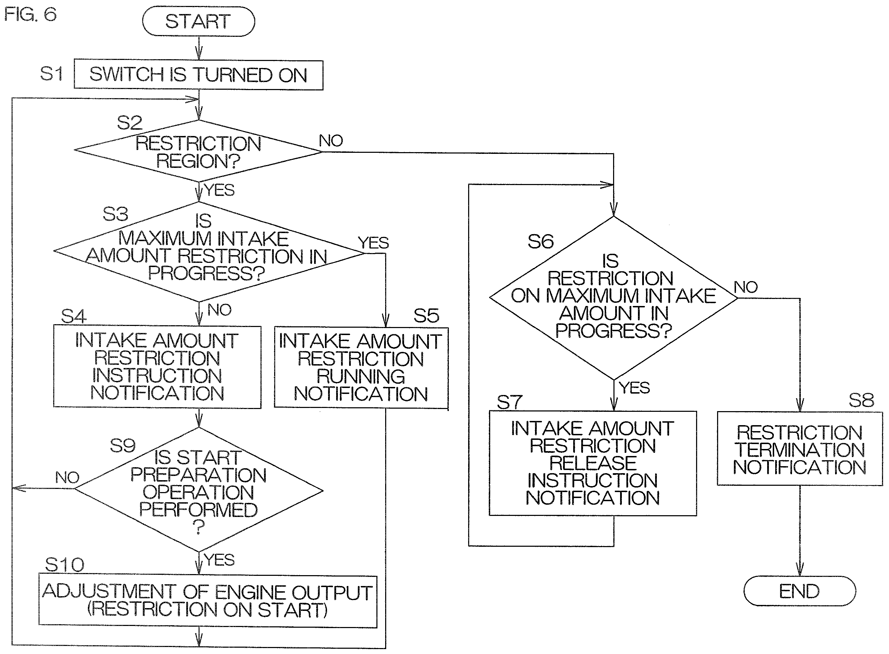

Fig. 6 is a flow chart which illustrates processing by the ECU 90, showing start restriction control of the motorcycle 1 mainly on the basis of a state of the engine 4 and others.

In Step S1, a user turns the main switch 16 ON, thereby developing a state that electricity is applied to the ECU 90.

Next, in Step S2, the engine state determination portion 103 determines whether or not a state of the engine 4 is in a restriction region on the basis of the ethanol ratio and the temperature of the engine 4. The ethanol ratio may be an ethanol ratio before Step S1, that is, before the main switch 16 is turned ON. That is, the ethanol ratio may be an ethanol ratio which has been stored in the storage portion 92 before the main switch 16 is turned OFF immediately before. The ethanol ratio may be used which is identified after Step S1 by the ratio identifying portion 100 and stored in the storage portion 92. In any case, the ethanol ratio is read out from the storage portion 92 and used for determination.

In Step S2, when it is determined that the state of the engine 4 is in the restriction region, the step proceeds to Step S3. In Step S3, the engine state determination portion 103 determines whether or not the intake amount restriction valve position sensor 82 detects that the intake amount restriction valve 58 is fully closed. That is, it is determined whether or not the maximum intake amount is restricted. Where the intake amount restriction valve 58 is not fully closed, the step proceeds to Step S4. In Step S4, the engine state determination portion 103 gives an intake amount restriction instruction notification issuing command P2 (refer to Fig. 4) to the notification control portion 105. In response to this, the notification control portion 105 causes, for example, the indicator 19a of the display panel 19 to blink so that a user is notified of the fact that the state of the engine 4 is in the restriction region and, therefore, the maximum intake amount is to be restricted. More specifically, when the state of the engine 4 is in the restriction region, a flag for control (restriction region flag) is raised. Where the restriction region flag is raised and the fact that the intake amount restriction valve 58 is fully closed is not detected, the notification control portion 105 causes the indicator 19a to blink. Thereby, a user can be prompted to carry out an operation for restricting the maximum intake amount, that is, an operation that the intake amount restriction valve 58 is placed in a fully closed position. The notification control portion 105 and the indicator 19a constitute an example of the intake amount restriction notifying means.

On the other hand, in Step S3, where it is determined that the intake amount restriction valve 58 is at a fully closed position and a maximum intake amount is restricted, the step proceeds to Step S5. In Step S5, the engine state determination portion 103 gives an intake amount restriction running notification issuing command P3 (refer to Fig. 4) to the notification control portion 105. In response to this, the notification control portion 105 turns, for example, the indicator 19a of the display panel 19 on (continuous lighting) so that a user is notified of the fact that the user runs the motorcycle 1, with the maximum intake amount being restricted. More specifically, where the restriction region flag is raised and also the fact that the intake amount restriction valve 58 is fully closed is detected, the notification control portion 105 turns the indicator 19a on continuously. Thereafter, the step returns to Step S2. In this case, the start restriction portion 104 allows the motorcycle 1 to start. That is, even where the state of the engine 4 is in the restriction region, in a state that the intake amount restriction valve 58 is fully closed to restrict the maximum intake amount, the start restriction determination portion 104 allows the motorcycle 1 to start running. However, since the state of the engine 4 is in the restriction region, the restriction region flag is kept raised.

In Step S2, where it is determined that the state of the engine 4 is not in the restriction region, there is no requirement on restriction for start for motorcycle 1. Therefore, the step proceeds to Step S6. In Step S6, the engine state determination portion 103 determines whether or not the intake amount restriction valve position sensor 82 detects that the intake amount restriction valve 58 is fully closed. That is, it is determined whether or not the maximum intake amount is restricted. When it is determined that the intake amount restriction valve 58 is at a fully closed position and the maximum intake amount is restricted, the step proceeds to Step S7. In Step S7, the engine state determination portion 103 gives an intake amount restriction release instruction notification issuing command P4 (refer to Fig. 4) to the notification control portion 105. In response to this, the notification control portion 105 causes the indicator 19a of the display panel 19 to blink, for example, so that a user is notified of the fact that restriction on the maximum intake amount is to be released. More specifically, where the restriction region flag is lowered and the fact that the intake amount restriction valve 58 is fully closed is detected, the notification control portion 105 causes the indicator 19a to blink. Thereafter, the step returns to Step S6. In this case, since the state of the engine 4 is not in the restricted state, the acceleration restriction portion 104 allows the motorcycle 1 to accelerate.

The user operates to open the intake amount restriction valve 58, by which the determination in Step S6 is made negative. Then, the step proceeds to Step S8. In Step S8, the engine state determination portion 103 gives a restriction termination notification issuing command P5 (refer to Fig. 4) to the notification control portion 105. In response to this, the notification control portion 105 turns of the indicator 19a of the display panel 19, for example, that a user is notified of the fact that restriction on the maximum intake amount is released. More specifically, where the restriction region flag is lowered and also the fact that the intake amount restriction valve 58 has been fully closed is not detected, the notification control portion 105 turns the indicator 19a off. It because no longer necessary to restrict acceleration of the motorcycle 1 or to notify the user. The control is terminated, therefore.

In Step S9 which is carried out after Step S4, the start restriction determination portion 104 determines whether or not the start preparation operation has been carried out by referring to output of the neutral switch 14. More specifically, it is determined whether or not the shift position is at a position other than the neutral position by referring to whether or not the neutral switch 14 is OFF as a result of the user's shift-in operation. The start preparation operation may be determined by procedures other than determination of the shift-in operation. For example, on the basis of output of the throttle position sensor 76, a determination may be made on whether an opening degree of the throttle valve 54 is a predetermined threshold value or more.

In Step S9, where it is determined that start preparation operation is not carried out, the step returns to Step S2. On the other hand, where it is determined that the start preparation operation has been carried out, the step proceeds to Step S10.

In Step S10, the start restriction determination portion 104 outputs the start restriction command P1 (refer to Fig. 4) to the output adjusting portion 106. In response to this order, the output adjusting portion 106 adjusts the output of the engine 4. Specifically, only when the restriction region flag is raised and also the intake amount restriction valve position sensor 82 does not detect that the intake amount restriction valve 58 is fully closed, the start preparation operation triggers the output adjustment of the engine 4 as will be described hereinafter.

Upon receipt of the start restriction order PI, the output adjusting portion 106 adjusts the output of the engine 4 so that the motorcycle 1 is restricted from starting. There is no particular restriction on a method for adjusting the output of the engine 4. For example, the injection control portion 102 may adjust a fuel injection amount of the fuel injection valve 52, thereby adjusting the output of the engine 4. Alternatively or in combination therewith, the ignition control portion 101 may adjust ignition timing of the ignition device 50, thereby adjusting the output of the engine 4.

"Restriction on start of the motorcycle 1" includes not only that the motorcycle 1 is not allowed to start but also that, with the output of the engine 4 kept to a level lower than an ordinary level, the motorcycle 1 is allowed to start (the motorcycle 1 is allowed to run at a lower speed than its ordinary speed, for example). The output adjusting portion 106 may stop the engine 4 or keep the engine 4 idling. The output adjusting portion 106 may control the engine 4 so as to make the rotation speed higher than an idling rotation speed while keeping the rotation speed of the engine 4 lower than an ordinary rotation speed corresponding to a throttle opening degree. That is, the output adjusting portion 106 may adjust the output of the engine 4 in such a manner that the motorcycle 1 is allowed to start more slowly than an ordinary time. Even in this case, the load of the engine 4 can be kept at a relatively low level.

The start restricting means for restricting the start of the motorcycle 1 is not limited to the output adjusting portion 106 which adjusts the output of the engine 4 but may have an arrangement which gives to the front wheel 8 (refer to Fig. 1) or the rear wheel 10 such a braking force that will not allow the motorcycle 1 to start.

After the engine 4 has been adjusted for the output, processing from Step S2 is repeated. Although not illustrated in Fig. 6, the step returns to Step S1 where the engine 4 is stopped.

As described above, in Step S2, it is determined whether or not the state of the engine 4 is in the restriction region. Further, in Step S3, it is determined whether or not the intake amount restriction valve 58 is at a fully closed position and the maximum intake amount is restricted accordingly. Where the state of the engine 4 is out of the restriction region (Step S2: NO) or the intake amount restriction valve 58 is at a fully closed position (Step S3: YES), great load is not applied to the engine 4 without restriction on the start of the motorcycle 1. Therefore, the restriction on the start of the motorcycle 1 is released. As a result, a user is able to carry out the shift-in operation and, thereby, able to start the motorcycle 1.

Further, in a state that the intake amount restriction valve 58 is at the fully closed position to restrict a maximum intake amount, the motorcycle 1 is allowed to start. There is, however, a case that the state of the engine 4 is in the restriction region. In this case, the restriction region flag is not released and the notification control portion 105 keeps the indicator 19a turned ON. While the motorcycle 1 is traveling, the engine 4 is increased in temperature and the state of the engine 4 is out of the restriction region. And then, the restriction region flag is released, by which the notification control portion 105 causes the indicator 19a to blink. Thereby, a user is notified of the fact that the state of the engine is out of the restriction region and prompted to release restriction on the maximum intake amount by placing the intake amount restriction valve 58 to the fully open position. The notification control portion 105 and the indicator 19a constitute an example of the intake amount restriction releasing notification means.

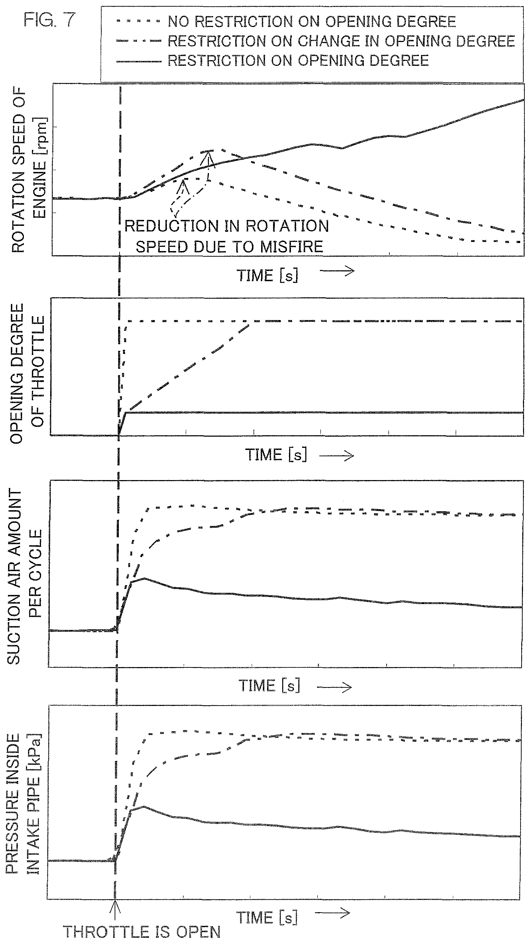

Fig. 7 illustrates advantages obtained by restricting the maximum intake amount, giving examples in which a temporal change has been studied with respect to a rotation speed of the engine, a throttle opening degree (opening degree of the throttle valve), a suction air amount per cycle and pressure inside an intake pipe. The results obtained where the intake amount restriction valve 58 has been fully closed are shown with solid lines. Further, the results obtained where the intake amount restriction valve 58 has been fully open are shown with dotted lines and alternate long and short dashed lines. The alternate long and short dashed lines show a comparative example where the intake amount restriction valve 58 is fully open and an opening-degree changing speed when the throttle valve 54 has been opened is kept constant. The dotted lines show a comparative example where the opening degree changing speed is not restricted.

Where there is no restriction on a maximum intake amount (shown with the dotted lines and the alternate long and short dashed lines), opening of the throttle valve 54 will cause a temporary increase in rotation speed of the engine. However, misfire takes place to reduce the rotation speed of the engine. This may be attributable to the fact that pressure inside the intake pipe is increased with an increase in intake amount and ethanol in a fuel is less likely to cause volatilization, thus resulting in lower fuel ratio in an air-fuel mixture. Restriction on a throttle opening-degree changing speed (shown with the alternate long and short dashed lines) will not cause a rapid increase in throttle opening degree, therefore, taking a longer time until the rotation speed of the engine starts to reduce. However, since no restriction is placed on the maximum intake amount, misfire will take place soon, thus resulting in reduction in rotation speed of the engine. Thus, when the vehicle is allowed to start, engine stall or hesitation will take place. As a result, the engine runs unstably, and there is a possibility that a rider may feel a serious sense of discomfort and also an excessive load may be applied to the engine.

On the other hand, where the intake amount restriction valve 58 is closed to restrict the maximum intake amount (shown with the solid line), pressure inside the intake pipe is kept low, thus making it possible to facilitate volatilization of ethanol in a fuel. As a result, a fuel ratio in the air-fuel mixture is increased, thereby giving a tendency that the engine is continuously increased in rotation speed without causing misfire. Thus, there is no chance of having engine stall or hesitation, if the vehicle is allowed to start. The vehicle is, therefore, allowed to start stably without any excessive load to the engine or waiting for completion of warm-up.

Hereinafter, a description will be given of motions of the first and the second valves 38A, 38B disposed on the first and the second bypass channels 36A, 36B.

The ECU 90 controls the second valve 38B so as to be in a closed state at the start of the engine 4 and controls the second valve 38B so as to be in an open state when the start of the engine 4 is completed. Thereby, at the start of the engine, an intake channel passing through the second bypass channel 36B is blocked. After start of the engine, air is supplied through the second bypass channel 36B to the engine 4 at a flow rate adjusted by the metering valve 35. Thereby, when the throttle valve 54 is fully closed, an intake amount adjusted by the metering valve 35 can be secured, thus making it possible to run the engine 4 at an idling rotation speed according to the intake amount thus adjusted.

On the other hand, the ECU 90 controls the first valve 38A so as to be in a closed state at the start of the engine 4 and opens the first valve 38A upon completion of start of the engine 4. More specifically, after start of the engine 4, the ECU 90 gives duty control to the solenoid 60A of the first valve 38A so as to attain an opening degree depending on the temperature of the engine 4 detected by the temperature sensor 72. That is, the lower the temperature of the engine 4 is, the more widely the first valve 38A is opened. Thereby, prior to completion of warming up the engine 4, the lower the temperature of the engine is, the more the air amount supplied to the engine 4 becomes. Accordingly, with the idling rotation speed set to be higher, stable running of the engine 4 can be secured prior to completion of warm-up.

As described above, according to the present preferred embodiment, on the basis of the temperature of the engine and the ethanol ratio in a fuel, it is determined whether or not the state of the engine 4 is in the restriction region where the maximum intake amount is to be restricted. Then, where the state of the engine 4 is in the restriction region, the motorcycle 1 is allowed to accelerate under the conditions that the intake amount restriction valve 58 is closed and the maximum intake amount is restricted to a constant value. Thereby, after start of the engine, a user is able to start the motorcycle 1 smoothly and finds it more convenient to use the motorcycle 1. The intake amount restriction valve 58 is closed, by which the maximum intake amount is restricted to a constant value, irrespective of the temperature of the engine 4.

In the prior art described in EP 2 149 692 A2, prior to completion of warm-up running, the motorcycle is not allowed to start or only allowed to start at an extremely low speed. Therefore, a rider is not able to start the motorcycle or feels a sense of discomfort at the start, even if the rider is able to start the motorcycle. On the contrary, in the present preferred embodiment, the maximum intake amount is restricted to a constant value, by which the rider is able to start the motorcycle 1 and hardly feels a sense of discomfort in the intake amount range up to the maximum intake amount.

The intake amount restriction valve 58 restricts the intake amount upstream of the throttle valve 54. Therefore, even if the throttle valve 54 is fully open, the maximum intake amount is regulated by the opening degree of the intake amount restriction valve 58. It is, thereby, possible to avoid an excessive intake amount of the engine 4 and also avoid engine stall or hesitation by keeping an air-fuel ratio high. Specifically, the maximum intake amount is restricted to a constant value, by which pressure inside the intake pipe of the engine 4 can be kept low. Thus, fuel evaporation can be facilitated, and even where an ethanol ratio is high, it is possible to keep high a fuel ratio (air-fuel ratio) in an air-fuel mixture. It is, thereby, possible to attain reliable and stable combustion inside the engine 4 even prior to warm-up. It is possible to avoid misfire to continue combustion inside the engine 4 and consequently avoid engine stall or hesitation. Thereby, the motorcycle 1 is allowed to start prior to completion of warm-up, without excessive load applied to the engine 4.

Further, since the maximum intake amount is restricted to a constant value, restriction is placed on a variation range of output (torque) of the engine 4. A saddle type vehicle such as the motorcycle 1 is light in weight and, therefore, variation in torque of the engine may easily give a sense of discomfort to a rider. In the present preferred embodiment, the maximum intake amount is restricted to a constant value, thereby suppressing variation in torque of the engine 4. Thus, it is possible to reduce a sense of discomfort given to a rider and provide the motorcycle 1 which can be used conveniently by the rider.

With the arrangement of the present preferred embodiment, since the throttle valve 54 is mechanically connected to the accelerator grip 18, it is impossible to control the opening degree of the throttle valve 54 independently of operation of the accelerator grip 18. That is, it is impossible to set an intake amount independently of the accelerator operation. Therefore, if such an attempt is made that the motorcycle is allowed to start smoothly before warm-up, without installing the intake amount restriction valve 58, the attempt must depend entirely on ignition control and fuel injection control. However, in reality, it is difficult that the motorcycle is allowed to start smoothly before warm-up only by ignition control and fuel injection control. Specifically, the engine 4 undergoes a discontinuous change in output torque to occur hesitation.

In contrast, with the arrangement of the present preferred embodiment, the intake amount restriction valve 58 installed separate from the throttle valve 54 can be used to restrict the maximum intake amount to a constant value, without depending on the opening degree of the throttle valve 54. Thereby, even before warm-up, the motorcycle 1 can be controlled so as to start smoothly without any discontinuation of output torque of the engine 4.

Further, in the present preferred embodiment, the indicator 19a is caused to blink, by which a user is notified of the state that the maximum intake amount is to be restricted. Thereby, the user is able to be aware that the running state of the engine 4 belongs to the restriction region. Therefore, the user can be prompted to restrict the maximum intake amount by closing the intake amount restriction valve 58. Still further, where the intake amount restriction valve 58 is closed and the motorcycle 1 is allowed to start, the indicator 19a is continuously turned on. Thus, even where the motorcycle 1 shows traveling characteristics different from those at an ordinary time, the user is able to realize a cause thereof and the sense of discomfort is reduced. In general, the motorcycle 1 is relatively light in weight. Therefore, if output characteristics of the engine are different from those at an ordinary time, acceleration performance varies greatly. The user is more likely to feel a sense of discomfort. In the present preferred embodiment, the indicator 19a notifies a user of a state that the maximum intake amount is to be restricted, and also the user himself operates the intake amount restriction valve 58 to restrict the maximum intake amount. Thereby, the user is able to be clearly aware of a running state that the maximum intake amount has been restricted and, therefore, is able to accept traveling characteristics of the motorcycle 1 different from those at an ordinary time without feeling a serious sense of discomfort.

Further, in the present preferred embodiment, when a state of the engine 4 is out of a restriction region, the indicator 19a is caused to blink. Thereby, a user is able to be aware that it is no longer necessary to restrict the maximum intake amount. Therefore, the user can be prompted to open the intake amount restriction valve 58 to release restriction on the maximum intake amount. Thus, the motorcycle 1 is allowed to travel at ordinary traveling characteristics. Since the intake amount restriction valve 58 is opened to release restriction on the maximum intake amount, the motorcycle 1 changes in traveling characteristics before and after the release. However, the user himself operates the intake amount restriction valve 58 according to notification by blinking of the indicator 19a, thereby releasing restriction on the maximum intake amount. Therefore, the user is able to expect that the motorcycle 1 changes in traveling characteristics. As a result, the user is able to accept the change in traveling characteristics of the motorcycle 1, without feeling a serious sense of discomfort.

It should be noted that the above-described driving pattern of the indicator 19a is an example and the indicator 19a can be driven in other patterns. For example, the indicator 19a may be caused to blink in Step S4, it may be turned off in Step S5, caused to blink in Step S7 and turned off in Step S8. Further, it may be caused to blink in Step S4, turned on in Step S5, turned on in Step S7 and turned off in Step S8. Still further, it may be turned on in Step S4, turned on in Step S5, turned off in Step S7 and turned off in Step S8.

In place of display by using the indicator 19a, character display may be used. Specifically, where an odometer using a segment-type display element (for example, 7-segment display) is installed inside the display panel 19, display on the odometer can be temporarily switched to notify a user. For example, character display of [cLoSE] is shown in Step S4, normal display by the odometer is shown in Step S5, character display of [oPEn] is shown in Step S7, and normal display by the odometer is shown in Step S8.

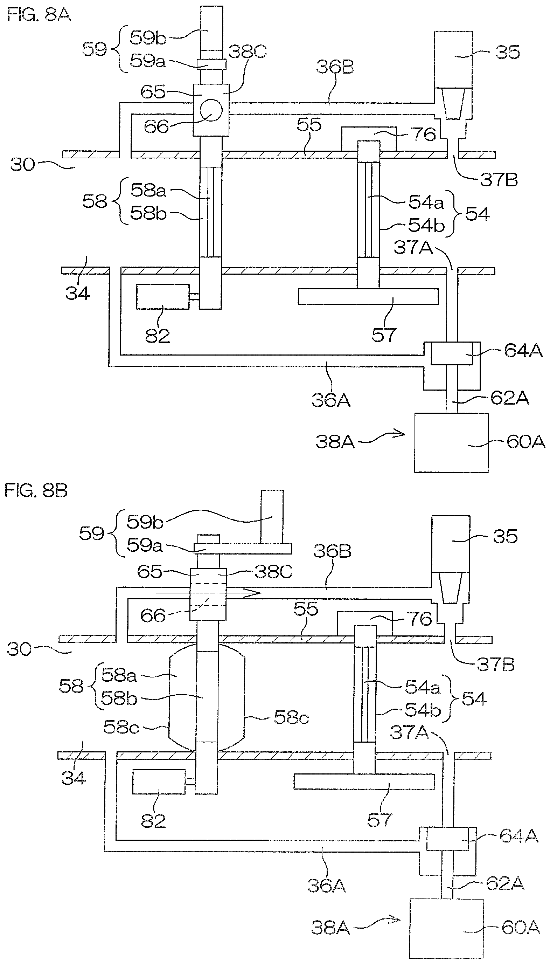

Figs. 8A and 8B are drawings which illustrate an arrangement of a saddle type vehicle according to a second preferred embodiment of the present invention, showing an arrangement in the vicinity of a throttle valve. Fig. 8A shows a state that an intake amount restriction valve 58 is closed, and Fig. 8B shows a state that the intake amount restriction valve 58 is opened. The arrangements shown in Fig. 8A and Fig. 8B can be used in place of the arrangement shown in Fig. 3 in the first preferred embodiment. In Fig. 8A and Fig. 8B, parts corresponding to parts of the arrangement shown in Fig. 3 are given the same reference numerals. Reference is also made to Fig. 1 and Fig. 2 as well as Fig. 4 to Fig. 7.

In the present preferred embodiment, a second bypass channel 36A is provided with an interlocking valve 38C which is actuated in association with an intake amount restriction valve 58 in place of a second valve. More specifically, the interlocking valve 38C is installed integrally on a rotational shaft 58b of the intake amount restriction valve 58. When the intake amount restriction valve 58 rotates, the interlocking valve 38C also rotates together. Specifically, the interlocking valve 38C assumes the shape of a ball valve. That is, the ball valve 38C is provided with a valve body 65 which rotates around a rotation axis along the rotational shaft 58b. The rotation axis of the valve body 65 is orthogonal to a direction of a passage axis of a second bypass channel 36B. The valve body 65 is fixed to the second bypass channel 36B so as to be rotatable around the rotation axis along the rotational shaft 58b. In Fig. 8A and Fig. 8B, the valve body 65 is shown in the shape of a circular column. It suffices, however, that the valve body 65 is a rotational body which is rotational symmetrically around the rotation axis, and typically the valve body 65 may be a sphere. A through-hole 66 which penetrates through in a direction orthogonal to the rotation axis is defined on the valve body 65. The valve body 65 rotates around the rotation axis, by which the through-hole 66 rotates around the rotation axis. Thereby, the interlocking valve 38C can be switched between an open state and a closed state. In the open state, the through-hole 66 is in alignment with the second bypass channel 36B, thereby communicatively connecting an upstream side with a downstream side thereof. In the closed state, the through-hole 66 is not in alignment with the second bypass channel 36B and the second bypass channel 36B is blocked upstream and downstream of the valve body 65.

The valve body 65 is fixed to the rotational shaft 58b in such a manner that when the intake amount restriction valve 58 is at the closed position, the interlocking valve 38C is in the closed state, and when the intake amount restriction valve 58 is at the open position, the interlocking valve 38C is in the open state. More specifically, the valve body 65 of the interlocking valve 38C is fixed to the rotational shaft 58b in such a manner that the valve body 58a of the intake amount restriction valve 58 is parallel to the direction in which the through-hole 66 penetrates.

On the other hand, in the present preferred embodiment, the first bypass channel 36A is connected to the main channel 34 in such a manner that an upstream side relative to the intake amount restriction valve 58 is communicatively connected to a downstream side relative to the throttle valve 54 in the main channel 34.

At the start of the engine 4, the intake amount restriction valve 58 is closed, by which the second bypass channel 36B is blocked at the same time. Then, at the time of cranking, an ECU 90 closes a first valve 38A disposed on the first bypass channel 36A. Thereby, the engine 4 is controlled for start in a state that a maximum intake amount is restricted by the intake amount restriction valve 58 which is in the closed state. Upon completion of start of the engine 4, the ECU 90 controls the opening degree of the first valve 38A depending on the temperature of the engine 4. That is. prior to completion of warming up the engine 4, the first valve 38A is increased in opening degree to make the intake amount stable, thereby keeping the idling rotation speed of the engine high. On the other hand, upon completion of warming up the engine 4, the ECU 90 makes relatively small the opening degree of the first valve 38A, thereby retaining the idling rotation speed.

As with the previously described first preferred embodiment, where the state of the engine 4 is in the restriction region, the motorcycle 1 is allowed to start under the condition that the intake amount restriction valve 58 is at a closed position. Therefore, in a state that the intake amount restriction valve 58 is in the closed position, a user is able to start and drive the motorcycle 1 immediately after starting the engine 4. When the engine 4 is completely warmed up and the state of the engine 4 is out of the restriction region, the ECU 90 controls the indicator 19a and notifies the user of an intake amount restriction release instruction. In response to this, the user operates the intake amount restriction valve 58 so as to be at the open position. In association therewith, the interlocking valve 38C is displaced to the opening position, thereby releasing the blocked state of the second bypass channel 36B. In response to this, the ECU 90 stops electricity applied to the first valve 38A and closes the first valve 38A. Subsequently, air is fed into the engine 4 from the second bypass channel 36B in the intake amount set by the metering valve 35. Therefore, even when the throttle valve 54 is fully closed, air necessary for idling is supplied through the second bypass channel 36B to the engine 4.

As described so far, according to the present preferred embodiment, in conjunction with the operation of the intake amount restriction valve 58, the second bypass channel 36B is opened and closed. It is, thereby, possible to reduce the number of components.

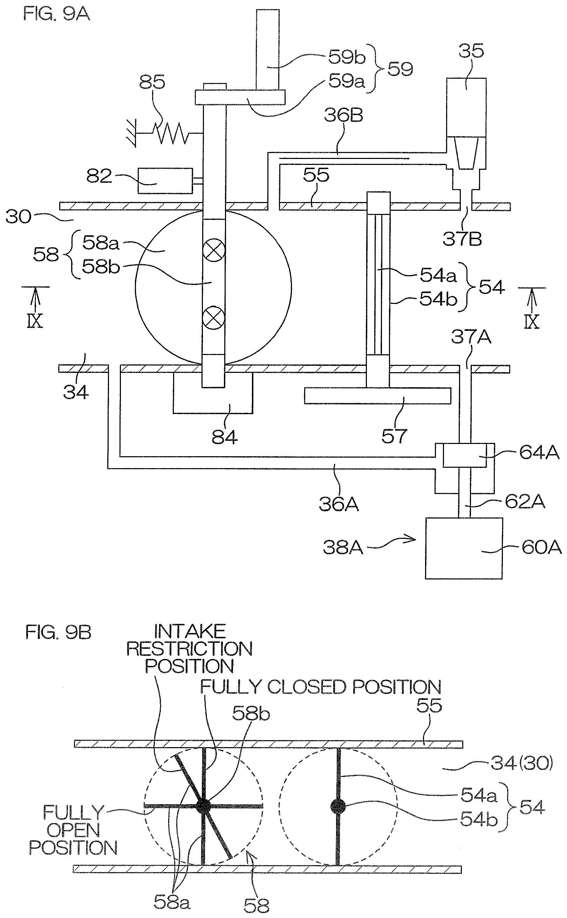

Figs. 9A and 9B are drawings which illustrate an arrangement of a saddle type vehicle according to a third preferred embodiment of the present invention, showing an arrangement in the vicinity of a throttle valve. Fig. 9B is a schematic sectional view taken along line IX-IX in Fig. 9A, showing a configuration of an intake amount restriction valve 58 and a throttle valve 54. The arrangements shown in Fig. 9A and Fig. 9B can be used in place of the arrangement shown in Fig. 3 in the first preferred embodiment. In Fig. 9A and Fig. 9B, parts corresponding to parts of the arrangement shown in Fig. 3 are given the same reference numerals. Reference is also made to Fig. 1 and Fig. 2 as well as Fig. 4 to Fig. 7.

The present preferred embodiment is provided with a position retaining mechanism 84 which retains a position of the intake amount restriction valve 58 at least at an intake restriction position and a fully open position, and a return mechanism 85 which imparts to the intake amount restriction valve 58 a spring force for urging the intake amount restriction valve 58 to move from a fully closed position to the intake restriction position. The intake restriction position is an intermediate position of a predetermined opening degree (for example, about 20%) set between the fully closed position and the fully open position. A valve body 58a of the intake amount restriction valve 58 is circular in the present preferred embodiment. A rotational shaft 58b of the intake amount restriction valve 58 and a rotational shaft 54b of the throttle valve 54 are disposed, with a sufficient interval ensured therebetween, in such a manner that when both of the intake amount restriction valve 58 and the throttle valve 54 are at the fully open position, they do not interfere with each other. More specifically, the interval between the rotational shafts 54a and 58a is set so as to be longer than the sum of radii of valve bodies 54a and 54b.

The position retaining mechanism 84 allows the rotational shaft 58b to move rotationally when an operating force is imparted to an operation lever 59, while regulating rotational movement of the rotational shaft 58b against a restoring force from the return mechanism 85 at the intake restriction position and the fully open position. More specifically, the position retaining mechanism 84 may be designed so as to give a frictional force adjusted for enabling the above-described motion to the rotational shaft 58b at an angle range between the intake restriction position and the fully open position. The position retaining mechanism 84 may be a latch mechanism which regulates rotational movement of the rotational shaft 58b at the intake restriction position and the fully open position so as to enable the above-described motion.

In the present preferred embodiment, a first bypass channel 36A is connected to the main channel 34 in such a manner that an upstream side of the intake amount restriction valve 58 is communicatively connected to a downstream side of the throttle valve 54. Further, a second bypass channel 36B is connected to the main channel 34 in such a manner that an upstream side of the throttle valve 54 is communicatively connected to a downstream side thereof at a downstream side relative to the intake amount restriction valve 58. Second valve 38B is not installed on the second bypass channel 36B (refer to Fig. 3).

At the start of the engine 4, a user operates the operation lever 59 to start the engine 4 (starter motor driving operation or kick operation of a kick pedal) in a state that the intake amount restriction valve 58 is kept at a fully closed position. The ECU 90 controls the first valve 38A so as to be in the fully closed state until the engine 4 is started. Since the second bypass channel 36B is located at a downstream side relative to the intake amount restriction valve 58, it is not necessary to give consideration to air intake which passes through the second bypass channel 36B. As described above, the engine 4 is subjected to cranking, with the intake channel 30 retained at the fully closed state. Thereby, an air-fuel mixture high in air-fuel ratio is supplied to the engine 4, thus making it possible to start the engine 4 smoothly.

When the engine 4 is started, a user takes his hand off the operation lever 59. Then, due to actions of the return mechanism 85, the intake amount restriction valve 58 is guided into an intake restriction position and the intake amount restriction valve 58 is retained at the intake restriction position by the position retaining mechanism 84. Thereby, such a state is developed that the maximum intake amount is restricted. When the throttle valve 54 is opened, the intake amount of the engine 4 does not exceed a certain amount. Thus, even where a state of the engine 4 is in the restriction region, a motorcycle 1 is allowed to start, without excessive load applied to the engine 4.

An intake amount restriction valve position sensor 82 detects whether or not the intake amount restriction valve 58 is at the intake restriction position. When the state of the engine 4 is in the restriction region, the ECU 90 allows the motorcycle 1 to start under the condition that the intake amount restriction valve position sensor 82 is in detection that the intake amount restriction valve 58 in the intake restriction position (YES in Step S3 in Fig. 6). Otherwise, when a start preparation operation is detected (Step S9 in Fig. 6), the engine 4 is adjusted for output, thereby not allowing the motorcycle 1 to start (Step S10 in Fig. 6).

Motions of the first valve 38A are similar to those described in the second preferred embodiment.

As described so far, in the present preferred embodiment, at the start of the engine 4, a user operates the operation lever 59 to keep the intake channel 30 fully closed and, thereby, is able to start the engine 4 smoothly. Then, the user takes his hand off the operation lever 59, by which the intake amount restriction valve 58 is automatically guided into the intake restriction position. Therefore, the user is able to start the motorcycle 1 irrespective of the state of the engine 4, because developed is a state that the maximum intake amount is restricted after start of the engine 4 even if the user does not consciously make an operation for restricting the intake. Then, the motorcycle 1 is allowed to start smoothly. Since the indicator 19a displays whether or not the state of the engine 4 is in the restriction region, the user keeps the intake amount restriction valve 58 at the intake restriction position as it is, where the indicator 19a is continuously turned on (intake amount restriction running notification). On the other hand, where the indicator 19a blinks (intake amount restriction release instruction notification), the user is able to operate the intake amount restriction valve 58 to the fully open position. The engine 4 changes in output characteristics by operation of the intake amount restriction valve 58 and the motorcycle 1 changes in traveling characteristics in response to this. However, since the change in traveling characteristics takes place at the time when the user operates the intake amount restriction valve 58, the user is able to accept the change easily. Therefore, the user does not have a serious sense of discomfort due to the change in traveling characteristics.

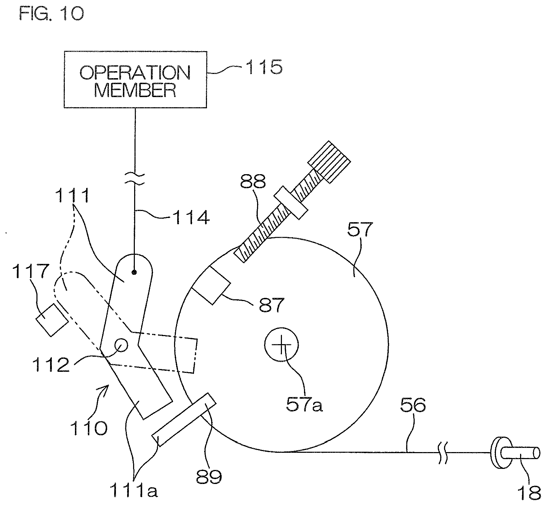

Fig. 10 illustrates an arrangement of a saddle type vehicle according to a fourth preferred embodiment of the present invention, schematically showing an arrangement in the vicinity of a throttle valve. This arrangement can be used in place of the arrangement shown in Fig. 3 in the first preferred embodiment. In Fig. 10, parts corresponding to parts of the arrangement shown in Fig. 3 are given the same reference numerals. Reference is also made to Fig. 1 and Fig. 2 as well as Fig. 4 to Fig. 7.

In the present preferred embodiment, a pulley 57 around which the throttle wire 56 is wound is regulated for its rotational movement range, thereby restricting a maximum opening degree of a throttle valve 54 and then restricting the maximum intake amount. In the present preferred embodiment, an intake amount restriction valve may be omitted. Further, second bypass channel 36B may be omitted.

A description will be given of a specific arrangement. The pulley 57 is provided with a projection 87 which projects in a direction parallel to a rotation axis 57a thereof. The projection 87 moves through a circular-arc path in association with rotational movement of the pulley 57, that is, rotational movement of the throttle valve 54. An idling adjustment stopper 88 is disposed at a position of a fully-closed-side end of the circular-arc path. The idling adjustment stopper 88 may be arranged with an adjustment screw, for example, which allows the leading-end position (a position in contact with the projection 87) to change along the path of the projection 87 by rotational operation. That is, the adjustment stopper 88 is arranged so as to adjust the position in contact with the projection 87 along the path of the projection 87 and regulates the fully-closed-side end of the path of the projection 87 by being in contact with the projection 87. Thereby, an opening degree of the throttle valve 54 at a fully closed position is made to an adjustable idling opening degree by the idling adjustment stopper 88. On the other hand, a fully open stopper 89 is fixed at a position of a fully-open-side end of the circular-arc path of the projection 87. The fully open stopper 89 is arranged so as to regulate rotational movement of the pulley 57 at a fully open position of the throttle valve 54.

In the vicinity of the pulley 57, disposed is a maximum opening degree restriction mechanism 110 for restricting a rotational movement range of the pulley 57 to restrict a maximum opening degree of the throttle valve 54. In the present preferred embodiment, the maximum opening degree restriction mechanism 110 includes a movable stopper 111 which enters into or withdraws from the movement path of the projection 87 and a supporting shaft 112 which supports the movable stopper 111 so as to be rotatable. One end of a wire 114 is connected to the movable stopper 111, and an operation member 115 is connected to the other end of the 114. When a user operates the operation member 115, an operating force thereof is transmitted by the wire 114 to the movable stopper 111, by which the movable stopper 111 rotates around the supporting shaft 112. The operation member 115 is preferably disposed at a position (for example, the handle 12 or others) at which a rider seated on the seat 3 is able to operate.

The movable stopper 111 may be, for example, a substantially L-shaped lever which has at one end a contact portion 111a which is brought into contact with the projection 87. The movable stopper 111 moves rotationally around the supporting shaft 112, by which the contact portion 111a enters into or withdraws from the path of the projection 87. When the contact portion 111a enters into the path of the projection 87, the contact portion 111a is positioned between a position of a fully-open-side end of the circular-arc path of the projection 87 and a position of a fully-closed-side end thereof. Thereby, a movement range of the projection 87 is restricted from the position of a fully-closed-side end regulated by the idling adjustment stopper 88 to an intermediate position in contact with the contact portion 111a and regulated thereby. Accordingly, a maximum opening degree of the throttle valve 54 is restricted to the intermediate opening degree when the projection 87 is in contact with the contact portion 111a.

In association with the movable stopper 111, installed is a stopper position sensor 117 for detecting a position of the movable stopper 111. The stopper position sensor 117 detects a position (intake restriction position) of the movable stopper 111 when the contact portion 111a enters into the path of the projection 87. An operation position of the operation member 115 and a position of the wire 114 correspond to a position of the movable stopper 111. Therefore, the stopper position sensor 117 may be arranged so as to directly detect the position of the movable stopper 111 or may be arranged so as to detect a position of the operation member 115 or that of the wire 114.

When the state of the engine 4 is in the restriction region, the ECU 90 allows the motorcycle 1 to start under the condition that the stopper position sensor 117 detects that the movable stopper 111 is in the intake restriction position to restrict the maximum intake amount (refer to Step S3 in Fig. 6). Otherwise, in response to start preparation operation (refer to Step S9 in Fig. 6), the ECU 90 adjusts output of the engine 4 to restrict start of the motorcycle 1 (refer to Step S10 in Fig. 6).

The above-described arrangement is able to provide the advantages similar to those of the first to third preferred embodiments.

In the present preferred embodiment, the movable stopper 111 is an example of the regulation member which regulates the movable range of the throttle valve 54 to a range narrower than a maximum movable range, thereby restricting the maximum opening degree of the throttle valve 54. The operation member 115 is also an example of the operation means which is operated by an operator for allowing the movable stopper 111 to move between the intake restriction position and the release position withdrawn from the intake restriction position. Further, the stopper position sensor 117 is an example of the restriction position detection means which detects that the movable stopper 111 is at an intake restriction position.

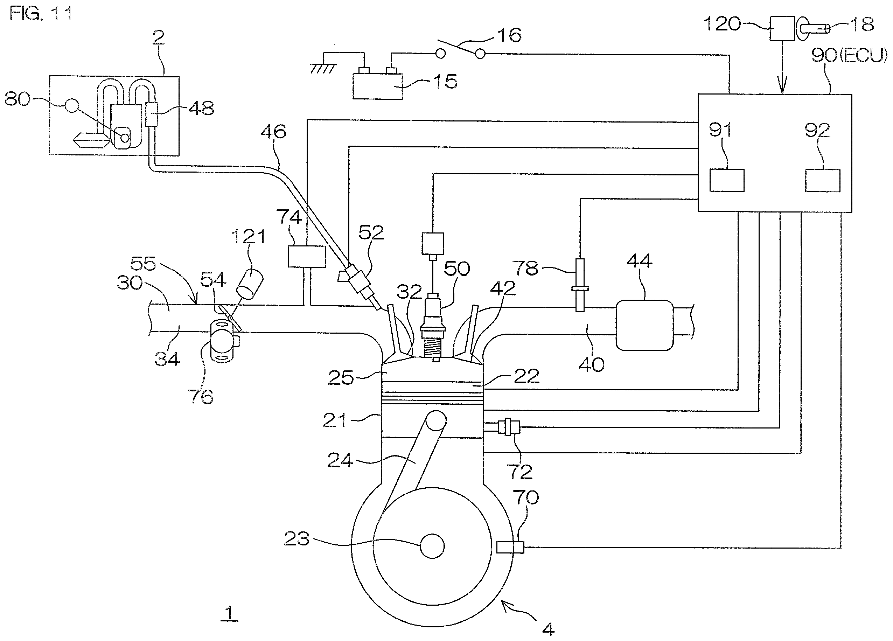

Fig. 11 illustrates an arrangement of a saddle type vehicle according to a fifth preferred embodiment of the present invention, showing an arrangement in relation to controlling a throttle valve. In Fig. 11, parts corresponding to the arrangements shown in Fig. 2 are given the same reference numerals. Further, reference is also made to Fig. 1.

In each of the preferred embodiments so far described, the operating force of the accelerator grip 18 is mechanically transmitted to the throttle valve 54. On the contrary, the present preferred embodiment is provided with an accelerator opening degree sensor 120 for detecting the operation amount (accelerator opening degree) of an accelerator grip 18, and an electrically-driven actuator 121 for driving the throttle valve 54. Mechanical connection is not provided between the accelerator grip 18 and the throttle valve 54. The ECU 90 controls the electrically-driven actuator 121 depending on output of the accelerator opening degree sensor 120, thereby controlling an opening degree of the throttle valve 54. Thus, an electric control-type throttle system (drive-by-wire system) is arranged.

The opening degree of the throttle valve 54 can be controlled independently of operation of the accelerator grip 18. Therefore, the opening degree of the throttle valve 54 can be controlled to restrict any of an intake amount at the start of the engine 4, a maximum intake amount when a state of the engine 4 is in a restriction region and an intake amount up to warm-up. Thus, a necessity for installing an intake amount restriction valve or a bypass channel is eliminated.

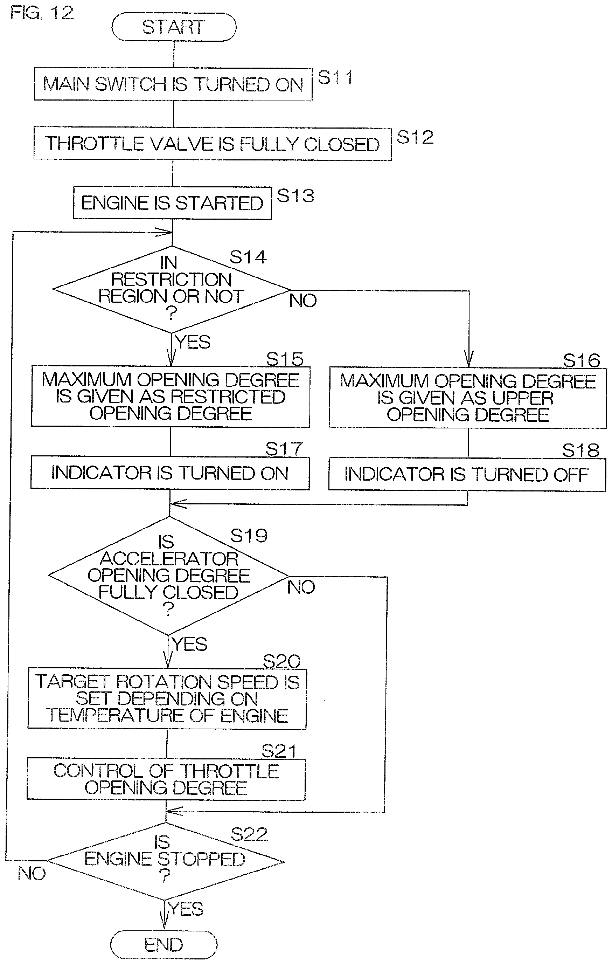

Fig. 12 is a flow chart which explains processing of the ECU 90.

When the main switch 16 is turned ON (Step S11), in preparation of start of the engine 4, the ECU 90 controls the electrically-driven actuator 121, thereby keeping the throttle valve 54 at the fully closed position (Step S12). Thereby, in a state that the intake is restricted, cranking can be carried out to start the engine 4 smoothly (Step S13).

Once the engine 4 has started, the ECU 90 determines whether or not a state of the engine 4 is in the restriction region (Step S14). When the state of the engine 4 is in the restriction region, the ECU 90 sets a maximum opening degree of the throttle valve 54 to a restricted opening degree (for example, about 20%) which is smaller than an upper opening degree thereof (Step S15). That is, even where the accelerator opening degree is a great value, the throttle valve 54 does not open to a degree greater than a maximum opening degree. Thereby, if the accelerator grip 18 is operated to a great extent to input a great accelerator opening degree, the maximum intake amount supplied to the engine 4 is restricted to a constant value, irrespective of the temperature of the engine 4. As a result, engine stall or hesitation does not take place and stable running of the engine 4 can be performed. Where the state of the engine 4 is in the restriction region, the maximum opening degree is retained constant, irrespective of the temperature of the engine 4.

On the other hand, where the state of the engine 4 is not in the restriction region (Step S14: NO), the ECU 90 sets the maximum opening degree of the throttle valve 54 to an upper opening degree (100%) and does not restrict the maximum intake amount (Step S16). Thereby, output characteristics of the engine 4 can be optimized, thereby allowing the motorcycle 1 to travel at excellent traveling performance.

On the other hand, the ECU 90 turns the indicator 19a on when the state of the engine 4 is in the restriction region (Step S17) and turns the indicator 19a off when the state of the engine 4 is not in the restriction region (Step S18). Thereby, a user can be notified of the state of the engine 4. The user is notified of the fact that when the indicator 19a is turned on, the state of the engine 4 is in the restriction region, by which the maximum intake amount is restricted. Therefore, where the traveling performance is different from that at an ordinary time, the user is able to be immediately aware of a cause thereof and does not realize a serious sense of discomfort.

Further, the ECU 90 controls the idling rotation speed of the engine 4 when the accelerator opening degree is a fully closed value (Step S19). That is, the ECU 90 sets a target idling rotation speed depending on the temperature of the engine 4 (Step S20) and gives feed-back control to the electrically-driven actuator 121 on the basis of the rotation speed of the engine 4 detected by the rotation speed sensor 70. Thereby, a throttle opening degree is controlled so as to attain the target idling rotation speed (Step S21). The ECU 90 sets a higher target idling rotation speed as the temperature of the engine 4 becomes lower until the engine 4 arrives at a predetermined temperature to complete warm-up.

Thereafter, until the main switch 16 is turned OFF to stop the engine 4 (Step S22), processing subsequent to Step S14 is repeated.

In the above-described arrangement, the throttle valve 54 driven by the electrically-driven actuator 121 is controlled for an opening degree, thus making it possible to restrict the maximum intake amount when the engine 4 is in the restriction region. Thereby, immediately after start of the engine 4, the motorcycle 1 is allowed to start, without great load applied to the engine 4.

A description has been so far given of the preferred embodiments of the present invention. The present invention can be carried out by other preferred embodiments. For example, in the preferred embodiments described so far, shown are an example that the intake amount restriction valve installed in the vicinity of the throttle valve is used to restrict the maximum intake amount and an example that an opening degree of the throttle valve is restricted to restrict the maximum intake amount. However, it is possible to restrict the maximum intake amount in an arrangement other than those described above. For example, an on-off valve for opening and closing an air intake port and an opening degree adjusting valve for changing an opening degree thereof may be installed. The air intake port is disposed upstream of an air cleaner which cleans air taken into the intake channel. The on-off valve and the opening degree adjusting valve may be used to restrict the maximum intake amount supplied to the engine 4. The on-off valve and the opening degree adjusting value may be opened/closed or adjusted for an opening degree manually or may be actuated by using an actuator. The actuator may be an electric motor, or an electromagnetic solenoid. The actuator also may be a pneumatic negative-pressure actuator which utilizes a negative pressure generated in an intake system on running the engine.

Further, in the first to fourth preferred embodiments so far described, the operating force of the accelerator grip 18 is mechanically transmitted to the throttle valve 54. These preferred embodiments are applicable to an electrically controlled throttle system (drive-by-wire system). That is, as with the fifth preferred embodiment, there may be installed an accelerator opening degree sensor for detecting the operation amount of the accelerator grip 18 (opening degree of accelerator) and an electrically-driven actuator for driving the throttle valve 54. Then, the ECU 90 may control the electrically-driven actuator depending on output of the accelerator opening degree sensor. However, being different from the arrangement of the fifth preferred embodiment, the intake amount restriction valve 58 which is operated manually is installed upstream of the throttle valve 54 driven by the electrically-driven actuator. Therefore, this is more advantageous than the fifth preferred embodiment in that a maximum intake amount can be restricted simply. In a different perspective, the arrangement described in each of the first to fourth preferred embodiments is advantageous of being applicable irrespective of whether the throttle valve is manually operated or electrically controlled. That is, it is possible to restrict the maximum intake amount without complicated motion control of the throttle valve.

Further, in the preferred embodiments so far described, given is an example where output of the O₂ sensor or output of the ethanol concentration sensor is used to identify an ethanol ratio in a fuel. However, such an arrangement is acceptable that when a fuel is supplied to a fuel tank, an alcohol ratio in a fuel is input to the ECU 90.

Still further, in the preferred embodiments so far described, shown is the motorcycle 1 which is arranged in such a manner that output of the engine 4 is transmitted to the rear wheel 10 by shift-in operation and clutch operation performed by a rider. However, the present invention is also applicable to a motorcycle equipped with a rotation speed response clutch (for example, a centrifugal clutch) which develops a force-transmitting state when the rotation speed of the engine exceeds a predetermined connecting speed. In this case, output of the engine 4 is adjusted so as to be less than a connecting speed, by which the motorcycle can be restricted from starting.

In addition, in the preferred embodiments so far described, the motorcycle is given as an example of a saddle type vehicle. However, as described previously, the saddle type vehicle to which the present invention is applicable shall not be limited to a motorcycle.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A saddle type vehicle (1) equipped with an engine (4) which is capable of burning a fuel which is a mixture of alcohol and gasoline at an arbitrary mixing ratio, the saddle type vehicle (1) comprising:
an engine temperature detection means (72) for detecting a temperature of the engine (4); and
an engine state determination means (103) for determining based on the temperature detected by the engine temperature detection means (72) whether or not a state of the engine (4) is in a predetermined restriction region at which a maximum intake amount is to be restricted to a restricted maximum intake amount;
**characterized by**
an engine control means (104, 106) for controlling the engine (4) in such a manner that, when the engine state determination means (103) determines that the state of the engine (4) is in the restriction region, the saddle type vehicle (1) is allowed to start in a state that the restricted maximum intake amount into the engine (4) is kept constant, irrespective of the temperature of the engine (4).

2. The saddle type vehicle (1) according to claim 1 further comprising:
a fuel mixing ratio obtaining means (100) for obtaining a mixing ratio of alcohol and gasoline in the fuel, wherein
the engine state determination means (103) is configured to determine whether or not the state of the engine (4) is in the predetermined restriction region on the basis of the temperature of the engine detected by the engine temperature detection means (72) and the mixing ratio obtained by the fuel mixing ratio obtaining means (100).

3. The saddle type vehicle (1) according to claim 1 or claim 2 further comprising;
an intake amount restriction notifying means (105, 19a) which is configured to notify a user of a state that an intake amount of the engine (4) is to be restricted when the engine state determination means (103) determines that the state of the engine (4) is in the predetermined restriction region.

4. The saddle type vehicle (1) according to any one of claim 1 to claim 3 further comprising:
an intake amount restriction releasing notification means (105, 19a) which is configured to notify a user of the fact that an intake amount of the engine (4) is not to be restricted, where the engine state determination means (103) determines that the state of the engine (4) is not in the predetermined restriction region in a state that the maximum intake amount of the engine (4) is restricted.

5. The saddle type vehicle (1) according to any one of claim 1 to claim 4 further comprising:
an operation means (59, 115) which is to be operated by an operator between a restriction position at which restriction on a maximum intake amount of the engine (4) is placed and a release position at which the restriction on the maximum intake amount is released; and
a restriction position detection means (82, 117) which is configured to detect the fact that the operation means (59, 115) is at the restriction position, wherein
the engine control means (104, 106) includes a start restricting means (106) for restricting a start of the saddle type vehicle (1), if the restriction position detection means (82, 117) is not in detection of the fact that the operation means (59, 115) is in the restriction position where the engine state determination means (103) determines that the state of the engine (4) is in the restriction region.

6. The saddle type vehicle (1) according to any one of claim 1 to claim 4 further comprising:
a throttle valve (54) which is disposed on an intake channel (30) of the engine (4);
an intake amount restriction valve (58) which is disposed on the intake channel (30) upstream of the throttle valve (54);
an operation means (59) which is to be operated by an operator for bringing the intake amount restriction valve (58) in a closed state; and
a closed state detection means (82) which is configured to detect whether or not the intake amount restriction valve (58) is in the closed state, wherein
the engine control means (104, 106) includes a start restricting means (106) for restricting a start of the saddle type vehicle (1), if the closed state detection means (82) is not in detection that the intake amount restriction valve (58) is in the closed state, where the engine state determination means (103) determines that the state of the engine (4) is in the restriction region.

7. The saddle type vehicle (1) according to any one of claim 1 to claim 4 further comprising:
a throttle valve (54) which is disposed on an intake channel (30) of the engine (4);
a regulation member (111) which is configured to regulate a movable range of the throttle valve (54) to a range narrower than a maximum movable range to restrict a maximum opening degree of the throttle valve (54);
an operation means (115) which is to be operated by an operator for allowing the regulation member (111) to move between a restriction position at which the movable range of the throttle valve (54) is regulated and a release position at which the movable range of the throttle valve (54) is not regulated; and
a restriction position detection means (117) which is configured to detect that the regulation member (111) is at the restriction position, wherein
the engine control means (104, 106) includes a start restricting means (106) which is configured to restrict a start of the saddle type vehicle (1), if the restriction position detection means (117) is not in detection that the regulation member (111) is at the restriction position, where the engine state determination means (103) determines that the state of the engine (4) is in the restriction region.

8. The saddle type vehicle (1) according to any one of claim 5 to claim 7 further comprising:
a start preparation detection means (14) which is configured to detect a start preparation operation of the saddle type vehicle (1) carried out by a driver, wherein
the start restricting means (106) is configured to restrict a running state of the engine (4) in response to the fact that the start preparation detection means (14) has detected the start preparation operation.

## Patentansprüche

1. Ein Sattel-Typ-Fahrzeug (1), das mit einem Motor (4) ausgerüstet ist, der in der Lage ist, einen Kraftstoff zu verbrennen, der eine Mischung aus Alkohol und Benzin in einem willkürlichen Mischverhältnis ist, wobei das Sattel-Typ-Fahrzeug (1) folgende Merkmale aufweist:
eine Motortemperaturerfassungseinrichtung (72) zum Erfassen einer Temperatur des Motors (4); und
eine Motorzustandsbestimmungseinrichtung (103) zum Bestimmen, basierend auf der Temperatur, die durch die Motortemperaturerfassungseinrichtung (72) erfasst wird, ob ein Zustand des Motors (4) sich in einer vorbestimmten Einschränkregion befindet oder nicht, bei der eine maximale Einlassmenge auf eine eingeschränkte maximale Einlassmenge eingeschränkt sein soll;
**gekennzeichnet durch**:
eine Motorsteuereinrichtung (104, 106) zum Steuern des Motors (4) auf eine derartige Weise, dass, wenn die Motorzustandsbestimmungseinrichtung (103) bestimmt, dass der Zustand des Motors (4) sich in der Einschränkregion befindet, das Sattel-typ-Fahrzeug (1) in einem Zustand starten darf, bei dem die eingeschränkte maximale Einlassmenge in den Motor (4) konstant gehalten wird, unabhängig von der Temperatur des Motors (4).

2. Das Sattel-Typ-Fahrzeug (1) gemäß Anspruch 1, das ferner folgendes Merkmal aufweist:
eine Kraftstoffmischverhältnis-Erhalteeinrichtung (100) zum Erhalten eines Mischverhältnisses von Alkohol und Benzin in dem Kraftstoff, wobei:
die Motorzustandsbestimmungseinrichtung (103) ausgebildet ist, um zu bestimmen, ob der Zustand des Motors (4) sich in der vorbestimmten Einschränkregion befindet oder nicht, auf der Basis der Temperatur des Motors, die durch die Motortemperaturerfassungseinrichtung (72) erfasst wird, und des Mischverhältnisses, das durch die Kraftstoffmischverhältnis-Erhalteeinrichtung (100) erhalten wird.

3. Das Sattel-Typ-Fahrzeug (1) gemäß Anspruch 1 oder Anspruch 2, das ferner folgendes Merkmal aufweist:
eine Einlassmengeneinschränk-Benachrichtigungseinrichtung (105, 19a), die ausgebildet ist, um einen Benutzer über einen Zustand zu benachrichtigen, bei dem eine Einlassmenge des Motors (4) eingeschränkt werden soll, wenn die Motorzustandsbestimmungseinrichtung (103) bestimmt, dass der Zustand des Motors (4) sich in der vorbestimmten Einschränkregion befindet.

4. Das Sattel-Typ-Fahrzeug (1) gemäß einem der Ansprüche 1 bis 3, das ferner folgendes Merkmal aufweist:
eine Einlassmengeneinschränkfreigabe-Benachrichtigungseinrichtung (105, 19a), die ausgebildet ist, um einen Benutzer über die Tatsache zu benachrichtigen, dass eine Einlassmenge des Motors (4) nicht eingeschränkt werden soll, wo die Motorzustandsbestimmungseinrichtung (103) bestimmt, dass der Zustand des Motors (4) sich nicht in der vorbestimmten Einschränkregion befindet, und zwar in einem Zustand, bei dem die maximale Einlassmenge des Motors (4) eingeschränkt ist.

5. Das Sattel-Typ-Fahrzeug (1) gemäß einem der Ansprüche 1 bis 4, das ferner folgende Merkmale aufweist:
eine Bedieneinrichtung (59, 115), die durch einen Bediener zwischen einer Einschränkposition, in der eine Einschränkung für die maximale Einlassmenge des Motors (4) gesetzt ist, und einer Freigabeposition bedient werden soll, in der die Einschränkung für die maximale Einlassmenge freigegeben wird; und
eine Einschränkpositionserfassungseinrichtung (82, 117), die ausgebildet ist, um die Tatsache zu erfassen, dass sich die Bedieneinrichtung (59, 115) in der Einschränkposition befindet, wobei:
die Motorsteuereinrichtung (104, 106) eine Starteinschränkeinrichtung (106) zum Einschränken eines Starts des Sattel-Typ-Fahrzeugs (1) aufweist, wenn die Einschränkpositionserfassungseinrichtung (82, 117) nicht die Tatsache erfasst, dass sich die Bedieneinrichtung (59, 115) in der Einschränkposition befindet, wo die Motorzustandsbestimmungseinrichtung (103) bestimmt, dass der Zustand des Motors (4) sich in der Einschränkregion befindet.

6. Das Sattel-Typ-Fahrzeug (1) gemäß einem der Ansprüche 1 bis 4, das ferner folgende Merkmale aufweist:
ein Drosselventil (54), das an einem Einlasskanal (30) des Motors (4) angeordnet ist;
ein Einlassmengeneinschränkventil (58), das an dem Einlasskanal (30) in Flussrichtung vor dem Drosselventil (54) angeordnet ist;
eine Bedieneinrichtung (59), die durch einen Bediener bedient werden soll, zum Bringen des Einlassmengeneinschränkventils (58) in einen geschlossenen Zustand; und
eine Geschlossener-Zustand-Erfassungseinrichtung (82), die ausgebildet ist, um zu erfassen, ob das Einlassmengeneinschränkventil (58) sich in dem geschlossenen Zustand befindet oder nicht, wobei:
die Motorsteuereinrichtung (104, 106) eine Starteinschränkeinrichtung (106) zum Einschränken eines Starts des Sattel-Typ-Fahrzeugs (1) aufweist, wenn die Geschlossener-Zustand-Erfassungseinrichtung (82) nicht erfasst, dass das Einlassmengeneinschränkventil (58) sich in dem geschlossenen Zustand befindet, wo die Motorzustandsbestimmungseinrichtung (103) bestimmt, dass der Zustand des Motors (4) sich in der Einschränkregion befindet.

7. Das Sattel-Typ-Fahrzeug (1) gemäß einem der Ansprüche 1 bis 4, das ferner folgende Merkmale aufweist:
ein Drosselventil (54), das an dem Einlasskanal (30) des Motors (4) angeordnet ist;
ein Regulierbauteil (111), das ausgebildet ist, um einen beweglichen Bereich des Drosselventils (54) auf einen Bereich zu regulieren, der schmaler ist als ein maximaler beweglicher Bereich, um einen maximalen Öffnungsgrad des Drosselventils (54) einzuschränken;
eine Bedieneinrichtung (115), die durch einen Bediener bedient werden soll, zum Erlauben, dass sich das Regulierbauteil (111) zwischen einer Einschränkposition, in der der bewegliche Bereich des Drosselventils (54) reguliert wird, und einer Freigabeposition bewegen kann, in der der bewegliche Bereich des Drosselventils (54) nicht reguliert wird; und
eine Einschränkpositionserfassungseinrichtung (117), die ausgebildet ist, um zu erfassen, dass das Regulierbauteil (111) sich an der Einschränkposition befindet, wobei:
die Motorsteuereinrichtung (104, 106) eine Starteinschränkeinrichtung (106) aufweist, die ausgebildet ist, um einen Start des Sattel-Typ-Fahrzeugs (1) einzuschränken, wenn die Einschränkpositionserfassungseinrichtung (117) nicht erfasst, dass das Regulierbauteil (111) sich in der Einschränkposition befindet, wo die Motorzustandsbestimmungseinrichtung (103) bestimmt, dass sich der Zustand des Motors (4) in der Einschränkregion befindet.

8. Das Sattel-Typ-Fahrzeug (1) gemäß einem der Ansprüche 5 bis 7, das ferner folgendes Merkmal aufweist:
eine Startvorbereitungserfassungseinrichtung (14), die ausgebildet ist, um einen Startvorbereitungsvorgang des Sattel-Typ-Fahrzeugs (1) zu erfassen, der durch einen Fahrer ausgeführt wird, wobei:
die Starteinschränkeinrichtung (106) ausgebildet ist, um einen Laufzustand des Motors (4) ansprechend auf die Tatsache einzuschränken, dass die Startvorbereitungserfassungseinrichtung (14) den Startvorbereitungsvorgang erfasst hat.

## Revendications

1. Véhicule de type à selle (1) équipé d'un moteur (4) qui est à même de brûler un carburant qui est un mélange d'alcool et d'essence selon un rapport de mélange arbitraire, le véhicule du type à selle (1) comprenant:
un moyen de détection de température de moteur (72) destiné à détecter une température du moteur (4); et
un moyen de détermination d'état de moteur (103) destiné à déterminer, sur base de la température détectée par le moyen de détection de température de moteur (72), si un état du moteur (4) se trouve ou non dans une région de limitation prédéterminée à laquelle une quantité d'admission maximale doit être limitée à une quantité d'admission maximale limitée;
**caractérisé par**
un moyen de commande de moteur (104, 106) destiné à commander le moteur (4) de sorte que, lorsque le moyen de détermination d'état de moteur (103) détermine que l'état du moteur (4) se trouve dans la région de limitation, le véhicule de type à selle (1) est autorisé à démarrer dans un état dans lequel la quantité d'admission maximale limitée dans le moteur (4) est maintenue constante, quelle que soit la température du moteur (4).

2. Véhicule du type à selle (1) selon la revendication 1, comprenant par ailleurs:
un moyen d'obtention de rapport de mélange de carburant (100) destiné à obtenir un rapport de mélange d'alcool et d'essence dans le carburant,
dans lequel
le moyen de détermination d'état de moteur (103) est configuré pour déterminer si l'état du moteur (4) se trouve ou non dans la région de limitation prédéterminée sur base de la température du moteur détectée par le moyen de détection de température de moteur (72) et du rapport de mélange obtenu par le moyen d'obtention de rapport de mélange de carburant (100).

3. Véhicule du type à selle (1) selon la revendication 1 ou la revendication 2, comprenant par ailleurs:
un moyen de notification de limitation de quantité d'admission (105, 19a) qui est configuré pour notifier à un utilisateur qu'une quantité d'admission du moteur (4) doit être limitée lorsque le moyen de détermination d'état de moteur (103) détermine que l'état du moteur (4) se trouve dans la région de limitation prédéterminée.

4. Véhicule du type à selle (1) selon l'une quelconque de la revendication 1 à la revendication 3, comprenant par ailleurs:
un moyen de notification de libération de limitation de quantité d'admission (105, 19a) qui est configuré pour notifier à un utilisateur qu'une quantité d'entrée du moteur (4) ne doit pas être limitée, où le moyen de détermination d'état de moteur (103) détermine que l'état du moteur (4) ne se trouve pas dans la région de limitation prédéterminée dans un état où la quantité d'admission maximale du moteur (4) est limitée.

5. Véhicule du type à selle (1) selon l'une quelconque de la revendication 1 à la revendication 4, comprenant par ailleurs:
un moyen d'actionnement (59, 115) qui doit être actionné par un opérateur entre une position de limitation à laquelle est placée une limitation de la quantité d'admission maximale du moteur (4) et une position de libération à laquelle est libérée la limitation de la quantité d'admission maximale; et
un moyen de détection de position de limitation (82, 117) qui est configuré pour détecter que le moyen d'actionnement (59, 115) se trouve dans la position de limitation,
dans lequel
le moyen de commande de moteur (104, 106) comporte un moyen de limitation de démarrage (106) destiné à limiter un démarrage du véhicule du type à selle (1) si le moyen de détection de position de limitation (82, 117) ne détecte pas que le moyen d'actionnement (59, 115) se trouve dans la position de limitation lorsque le moyen de détermination d'état de moteur (103) détermine que l'état du moteur (4) se trouve dans la région de limitation.

6. Véhicule du type à selle (1) selon l'une quelconque de la revendication 1 à la revendication 4, comprenant par ailleurs:
une soupape d'étranglement (54) qui est disposée sur un canal d'admission (30) du moteur (4);
une soupape de limitation de quantité d'admission (58) qui est disposée sur le canal d'admission (30) en amont de la soupape d'étranglement (54);
un moyen d'actionnement (59) qui doit être actionné par un opérateur pour amener la soupape de limitation de quantité d'admission (58) dans un état fermé; et
un moyen de détection d'état fermé (82) qui est configuré pour détecter si la soupape de limitation de quantité d'admission (58) se trouve ou non à l'état fermé,
dans lequel
le moyen de commande de moteur (104, 106) comporte un moyen de limitation de démarrage (106) destiné à limiter un démarrage du véhicule du type à selle (1) si le moyen de détection d'état fermé (82) ne détecte pas que la soupape de limitation de quantité d'admission (58) se trouve à l'état fermé lorsque le moyen de détermination de l'état de moteur (103) détermine que l'état du moteur (4) se situe dans la région de limitation.

7. Véhicule du type à selle (1) selon l'une quelconque de la revendication 1 à la revendication 4, comprenant par ailleurs:
une soupape d'étranglement (54) qui est disposée sur un canal d'admission (30) du moteur (4);
un élément de régulation (111) qui est configuré pour réguler une plage mobile de la soupape d'étranglement (54) dans une plage plus étroite qu'une plage mobile maximale pour limiter un degré d'ouverture maximum de la soupape d'étranglement (54);
un moyen d'actionnement (115) devant être actionné par un opérateur pour permettre que l'élément de régulation (111) se déplace entre une position de limitation à laquelle est régulée la plage mobile de la soupape d'étranglement (54) et une position de libération à laquelle n'est pas régulée la plage mobile de la soupape d'étranglement (54); et
un moyen de détection de position de limitation (117) qui est configuré pour détecter que l'élément de régulation (111) se trouve dans la position de limitation,
dans lequel
le moyen de commande de moteur (104, 106) comporte un moyen de limitation de démarrage (106) qui est configuré pour limiter un démarrage du véhicule du type à selle (1) si le moyen de détection de position de limitation (117) ne détecte pas que l'élément de régulation (111) se trouve à la position de limitation lorsque le moyen de détermination d'état de moteur (103) détermine que l'état du moteur (4) se trouve dans la région de limitation.

8. Véhicule du type à selle (1) selon l'une quelconque de la revendication 5 à la revendication 7, comprenant par ailleurs:
un moyen de détection de préparation de démarrage (14) qui est configuré pour détecter une opération de préparation de démarrage du véhicule du type à selle (1) effectuée par un conducteur,
dans lequel
le moyen de limitation de démarrage (106) est configuré pour limiter un état de fonctionnement du moteur (4) en réponse au fait que le moyen de détection de préparation de démarrage (14) a détecté l'opération de préparation de démarrage.
